# FASCICULE DE BREVET EUROPEEN

(11) **EP 4 077 518 B1**
(45) Date de publication et mention de la délivrance du brevet: **02.12.2026**
(21) Numéro de dépôt: 20848960.9
(22) Date de dépôt: 18.12.2020
(51) Int. Cl.: C08K 3/22, E01C 7/18, C04B 26/26, C08J 3/22, C08L 95/00, C04B 22/06, C04B 111/00

(54) **COMPOSITIONS BITUMINEUSES, PROCÉDÉS ET UTILISATIONS ASSOCIÉS**
BITUMINÖSE ZUSAMMENSETZUNGEN , ZUGEHÖRIGE VERFAHREN UND VERWENDUNGEN
BITUMINOUS COMPOSITIONS , RELATED PROCESSES AND USES

(30) Priorité: 20.12.2019 FR 1915235
(43) Date de publication de la demande: 26.10.2022
(73) Titulaire: TotalEnergies OneTech, 92400 Courbevoie (FR)
(72) Inventeur: GAMET, Olivier, 77700 Bailly Romainvilliers (FR); MOUAZEN, Mouhamad, 92000 Nanterre (FR); OEST, Stefan, 25524 Itzehoe (DE)
(74) Mandataire: Lavoix
(86) Numéro de dépôt international: PCT/FR2020/052536
(87) Numéro de publication internationale: WO 2021/123668

(56) Documents cités:
- EP-A1- 0 458 386
- WO-A1-2015/071370
- WO-A1-2018/206489
- WO-A1-2021/116296
- US-A- 4 631 088
- US-A- 5 756 563
- US-A- 5 840 109
- DATABASE WPI Week 201966, Derwent World Patents Index; AN 2019-68567H, XP002799812

## Description

### Domaine Technique

La présente invention concerne le domaine technique des liants pouvant se substituer aux compositions de bitumes traditionnellement utilisées, en particulier dans le domaine routier. Plus précisément, l'invention concerne de nouvelles compositions bitumineuses, leurs procédés de préparation et leurs utilisations dans les domaines routier et industriel.

Le raffinage du pétrole comporte différents traitements et transformations. Le pétrole brut subit une première distillation, dite distillation sous pression atmosphérique (soit à 1013,25 hPa). Cette première étape de distillation permet de récupérer différentes fractions d'hydrocarbures (gaz : butane et propane, essence légère, essence lourde, kérosène, gasoil, fioul domestique...), séparées en fonction de leur température d'ébullition. La distillation atmosphérique est menée dans une colonne à plateaux. A l'issue de cette distillation sous pression atmosphérique, il reste une fraction résiduelle lourde, qui est appelée résidu atmosphérique ou résidu de distillation atmosphérique. Ce résidu atmosphérique contient des hydrocarbures à longues chaînes qui, de ce fait, sont fragiles et sont donc susceptibles d'être coupées en plus petites chaines, si le chauffage est poursuivi à pression atmosphérique. Ce résidu est donc soumis à une seconde distillation, sous pression réduite (communément appelée distillation sous vide). La pression réduite utilisée pour cette deuxième distillation est, en général, dans la gamme de 10 à 150 hPa. Une telle pression réduite permet d'abaisser la température à laquelle les composants s'évaporent, et permet ainsi de réduire le chauffage. La distillation sous pression réduite est, également, menée dans une colonne à plateaux ou à garnissage, ou un système mixte associant ces deux types de colonnes. A l'issue de cette étape de distillation sous vide, il reste une fraction résiduelle lourde, qui est appelée résidu de distillation sous vide, ou résidu de distillation sous pression réduite.

Il est toujours commercialement intéressant de transformer les résidus lourds en coupes légères qui ont plus de valeur commerciale. Aussi, un procédé de viscoréduction (visbreaking selon la terminologie anglo-saxonne) est appliqué sur les résidus de distillation sous vide, pour transformer partiellement les produits lourds en produits légers, ce qui a également pour effet de réduire la viscosité du résidu obtenu à l'issue de cette opération de viscoréduction. La viscoréduction permet, notamment, de récupérer les molécules nobles et d'extraire du fuel et du gasoil. Une telle opération de viscoréduction correspond à un « craquage thermique » réalisé, en général, en phase liquide à une température dans la gamme allant de 420 °C à 500 °C, de préférence à une température de 450 à 460°C, et sous pression dans la gamme allant de 5 000 à 20 000 hPa. La viscoréduction est réalisée sans apport d'hydrogène. Le résidu obtenu est appelé résidu viscoréduit.

Un tel résidu viscoréduit peut notamment présenter une stabilité intrinsèque S inférieure à 2,5 et/ou un taux de peptisation Sa inférieur à 0,6, lesdites valeurs S et Sa étant définies et mesurées selon la norme ASTM D 7157-12. Les résidus viscoréduits peuvent être ajoutés à d'autres bases bitumes pour en abaisser le coût notamment, du fait de leur prix plus faible que les bitumes. Par contre, ils ne peuvent pas être utilisés seuls ou dans des quantités importantes, car dans ce cas il n'est pas possible d'obtenir un liant qui soit conforme aux exigences des normes EN 12591 et EN 13924-1, et notamment de la norme EN12591, pour répondre aux spécificités des applications routières (bitumes de grade routier). En particulier, dans la demande WO 2015/071370, il est préconisé de les utiliser dans une quantité représentant au plus 50% massique de la composition bitumineuse.

Il est également connu que l'utilisation de résidus de distillation sous vide viscoréduits est responsable de l'apparition de lézardes, de cassures, de fissures, de craquelures et/ou de coupures notamment, apparaissant à basse température, lorsqu'ils sont utilisés en quantité importante, dans les revêtements routiers EP 0 458 386 A1 concerne des mélanges stabilisés sous forme fluide utilisables pour les routes et qui comprennent un résidu viscoréduit (85-98%) et un copolymère à blocs SBS.

Dans le cadre de l'invention, la demanderesse propose de nouvelles compositions bitumineuses qui permettent de valoriser les bases bitumes connues pour ne pas donner satisfaction, tels que les résidus viscoréduits. Les compositions selon l'invention, malgré la présence de telles bases bitumes, présentent une résistance au vieillissement adaptée pour servir de liant, notamment dans le domaine routier, et, en particulier, pour être utilisées pour fabriquer des enrobés ou asphaltes. Un objectif est également de proposer de telles compositions bitumineuses, qui permettent de réduire l'apparition de fissures, à basse température.

Les compositions bitumineuses selon l'invention pourraient donc constituer un substitut aux compositions de bitume traditionnelles, ce qui serait particulièrement avantageux dans le cas de pénuries de bitumes de grade routier. De plus, dans le cadre de la décision de l'Organisation Mondiale Maritime de réduire en 2020 la limite maximale en soufre dans les carburants maritimes à 0,5% massique, il est vraisemblable qu'il y aura moins de bitumes répondant aux spécificités routières disponibles. En effet, les bitumes vont devoir faire l'objet de traitements qui donneront du diesel et de la coke. Dans ce contexte, l'invention propose des substituts aux bitumes routiers, standards et aux bitumes routiers durs, qui pourraient venir à manquer dans les années à venir. En particulier, l'invention propose des substituts aux bitumes routiers standards qui pourraient venir à manquer dans les années à venir.

### Invention

Dans ce contexte, l'invention concerne des compositions bitumineuses comprenant un mélange :
- d'une base bitume, qui représente au moins 50% en masse, et de préférence au moins 80% en masse, et préférentiellement au moins 90% en masse, de la masse totale de la composition, et
- d'un hydroxyde XOH avec X = Na ou K, qui représente de 0,001 à 1 % en masse, de la masse totale de la composition,
la dite base bitume ayant une stabilité intrinsèque S de 1 à 2,5 et/ou un taux de peptisation Sa de 0 à 0,6, lesdites valeurs S et Sa étant mesurées selon la norme ASTM D 7157-12.

Dans le cadre de l'invention, les inventeurs ont élaboré de nouvelles compositions bitumineuses qui, bien que comprenant une quantité importante d'une base bitume ayant une stabilité intrinsèque S de 1 à 2,5 et/ou un taux de peptisation Sa de 0 à 0,6, présentent des propriétés de résistance au vieillissement satisfaisantes. En particulier, les compositions bitumineuses selon l'invention présentent une variation de la température bille-anneau plus faible et un maintien de la pénétrabilité à l'aiguille plus important, lorsqu'elles sont soumises à des tests de vieillissement, par rapport à la base bitumineuse seule présente dans ladite composition. En particulier, les compositions selon l'invention sont alors conformes aux exigences de la norme EN 12591. Une telle amélioration considérable des propriétés de vieillissement permettant de rendre apte à une utilisation dans le domaine routier des compositions contenant une telle base bitume en quantité importante était totalement imprévisible. La demande WO2018/206489 au nom de la demanderesse ne prévoyait pas de mettre en œuvre une combinaison d'hydroxyde et d'additif aminé sur de telles bases bitume, connues pour ne pas répondre aux exigences routières.

De manière avantageuse, une composition selon l'invention présente l'une des caractéristiques suivantes, plusieurs des caractéristiques suivantes, voire toutes les caractéristiques suivantes :
- la base bitume est un mélange de produits issus de la viscoréduction de résidus de distillation sous pression réduite, lesdits résidus de distillation sous pression réduite provenant de la distillation sous pression réduite de résidus atmosphériques issus de la distillation directe sous pression atmosphérique du pétrole ;
- la composition selon l'invention comprend de 0,002 à 0,5 % en masse, de préférence de 0,01 à 0,5 % en masse d'hydroxyde XOH avec X = Na ou K, les % étant des % massiques, par rapport à la masse totale de la composition ;
- l'hydroxyde XOH, avec X = Na ou K, forme des particules qui ont une taille maximale moyenne dans la gamme allant de 10 à 100 µm, de préférence dans la gamme allant de 20 à 60 µm et/ou qui ont une taille maximale inférieure ou égale à 100 µm, de préférence inférieure ou égale à 60 µm ;
- l'hydroxyde XOH est de la soude ;
- après vieillissement RTFOT (à une température de 163°C, pendant 75 minutes et sous débit d'air de 4 litres/min), selon la norme EN 12607-1, la variation de la température de ramollissement bille anneau de ladite composition, déterminée selon la norme EN 1427, est inférieure à 8°C et/ou le maintien de la pénétrabilité à l'aiguille à 25°C de ladite composition, déterminée selon la norme EN 1426, est supérieur à 60% ;
- après vieillissement RTFOT (à une température de 163°C, pendant 75 minutes et sous débit d'air de 4 litres/min) selon la norme EN 12607-1, la variation de la température de ramollissement bille anneau de la base bitume, déterminée selon la norme EN 1427, est supérieure à 8°C et/ou le maintien de la pénétrabilité à l'aiguille à 25°C de la base bitume, déterminée selon la norme EN 1426, est inférieur ou égal à 60% ;
- après vieillissement RTFOT (à une température de 163°C, pendant 75 minutes et sous débit d'air de 4 litres/min) + PAV (à une température de 100°C, pendant 20 heures et à une pression de 2100 kPa), selon les normes EN 12607-1 et EN 14769, la variation de la température de ramollissement bille anneau de la composition selon l'invention, déterminée selon la norme EN 1427, est inférieure à 16°C et/ou le maintien de la pénétrabilité à l'aiguille à 25°C de ladite composition, déterminée selon la norme EN 1426, est supérieur à 50% ;
- ladite composition a une pénétrabilité à l'aiguille à 25°C, déterminée selon la norme EN 1426, qui appartient à la gamme allant de 5 à 80 mm/10 et/ou une température de ramollissement bille anneau, déterminée selon la norme EN 1427, qui appartient à la gamme allant de 45 à 75°C ;
- après vieillissement RTFOT (à une température de 163°C, pendant 75 minutes et sous débit d'air de 4 litres/min) + PAV (à une température de 100°C, pendant 20 heures et à une pression de 2100 kPa), selon les normes EN 12607-1 et EN 14769, la variation de la température de ramollissement bille anneau de la base bitume, déterminée selon la norme EN 1427, est supérieure à 16°C ;
- la composition selon l'invention comprend, en outre, un composant hydrocarboné **CH**, choisi parmi les huiles hydrocarbonées, les bitumes de grade mou, les bitumes fluxés, les bitumes fluidifiés et leurs mélanges, ledit composant hydrocarboné **CH** représentant de préférence au plus 10% en masse, préférentiellement 0,1 à 10% en masse, de manière plus préférée 0,5 à 8% en masse, et de manière encore plus préférée 1 à 5% en masse, de la masse totale de la composition ;
- la composition selon l'invention comprend, en outre, un promoteur d'adhésion choisi parmi les amines, diamines, polyamines, alkyl amido amines, amidopolyamines, imidazolines, et leurs mélanges, ledit promoteur d'adhésion représentant de préférence 0,01 à 2 % en masse, préférentiellement 0,05 à 1 % en masse, et de manière encore plus préférée 0,1 à 0,3 % en masse, de la masse totale de la composition.

L'invention a également pour objet un procédé de préparation d'une composition bitumineuse, comprenant les étapes suivantes :
a- disposer d'une composition bitumineuse initiale comprenant une base bitume ayant une stabilité intrinsèque S de 1 à 2,5 et/ou un taux de peptisation Sa de 0 à 0,6, lesdites valeurs S et Sa étant mesurées selon la norme ASTM D 7157-12, et
b- incorporer un hydroxyde XOH avec X = Na ou K, dans une quantité telle que la quantité d'hydroxyde XOH introduite représente de 0,001 à 1 % en masse, de la masse totale de la composition bitumineuse finale obtenue,
la composition bitumineuse initiale comprenant ladite base bitume en quantité telle que ladite base bitume représente au moins 50% en masse, de préférence au moins 80% en masse, et préférentiellement au moins 90% en masse, de la masse totale de la composition bitumineuse obtenue.

De manière avantageuse, dans le cadre de l'invention, à l'étape b, une composition hydrocarbonée **IC** comprenant de 15 à 50% en masse d'hydroxyde XOH avec X = Na ou K est incorporée à la composition bitumineuse initiale, ladite composition **IC**, comprenant un composant hydrocarboné **CH**, de préférence choisi parmi les huiles hydrocarbonées, les bitumes de grade mou, les bitumes fluxés, les bitumes fluidifiés et leurs mélanges.

Notamment, l'hydroxyde XOH, avec X = Na ou K, est présent dans la composition **IC**, sous la forme de particules qui ont une taille maximale moyenne dans la gamme allant de 10 à 100 µm, de préférence dans la gamme allant de 20 à 60 µm et/ou qui ont une taille maximale inférieure ou égale à 100 µm, de préférence inférieure ou égale à 60 µm.

En général, l'incorporation de la composition hydrocarbonée **IC** dans la composition bitumineuse initiale, est effectuée, à une température appartenant à la gamme allant de 150 à 220 °C, de préférence à la gamme allant de 160 à 190 °C et/ou avec une agitation appartenant à la gamme allant de 100 à 500 tr/min, de préférence à la gamme allant de 200 à 400 tr/min et/ou pendant une durée de 10 à 180 minutes, de préférence de 10 à 20 minutes.

L'invention a également pour objet différentes utilisations d'un hydroxyde XOH avec X = Na ou K dans une base bitume représentant au moins 50% en masse, de préférence au moins 80% en masse, et préférentiellement au moins 90% en masse, de la masse totale d'une composition bitumineuse, pour améliorer les propriétés de ladite composition. Ladite base bitume est caractérisée par une stabilité intrinsèque S de 1 à 2,5 et/ou un taux de peptisation Sa de 0 à 0,6, lesdites valeurs S et Sa étant mesurées selon la norme ASTM D 7157-12.

En particulier, l'invention concerne l'utilisation d'un hydroxyde XOH avec X = Na ou K, dans une composition bitumineuse qui comprend une base bitume ayant une stabilité intrinsèque S de 1 à 2,5 et/ou un taux de peptisation Sa de 0 à 0,6, lesdites valeurs S et Sa étant mesurées selon la norme ASTM D 7157-12, ladite base bitume représentant au moins 50% en masse, de préférence au moins 80% en masse, et préférentiellement au moins 90% en masse, de la masse totale de la composition bitumineuse, dans laquelle l'hydroxyde XOH avec X = Na ou K est introduit dans la composition bitumineuse, dans une quantité représentant de 0,001 à 1 % en masse, de préférence, de 0,002 à 0,5 % en masse, et préférentiellement de 0,01 à 0,5 % en masse, de la masse totale de la composition bitumineuse, pour améliorer la résistance au vieillissement sous RTFOT (à une température de 163°C, pendant 75 minutes et sous débit d'air de 4 litres/min) réalisé selon la norme EN 1426 et/ou la résistance au vieillissement sous RTFOT (à une température de 163°C, pendant 75 minutes et sous débit d'air de 4 litres/min) + PAV (à une température de 100°C, pendant 20 heures et à une pression de 2100 kPa) réalisés selon les normes EN 12607-1 et EN 14769, les % en masse donnés pour la base bitume et l'hydroxyde étant calculés par rapport à la masse totale de la composition bitumineuse incluant l'hydroxyde.

De manière avantageuse, l'introduction de l'hydroxyde XOH avec X = Na ou K dans la composition bitumineuse conduit, après vieillissement RTFOT (à une température de 163°C, pendant 75 minutes et sous débit d'air de 4 litres/min), selon la norme EN 12607-1, à une variation de la température de ramollissement bille anneau, déterminée selon la norme EN 1427, inférieure à 8°C et/ou à un maintien de la pénétrabilité à l'aiguille à 25°C, déterminée selon la norme EN 1426, supérieur à 60%.

De manière avantageuse, l'introduction de l'hydroxyde XOH avec X = Na ou K dans la composition bitumineuse conduit, après vieillissement RTFOT (à une température de 163°C, pendant 75 minutes et sous débit d'air de 4 litres/min) + PAV (à une température de 100°C, pendant 20 heures et à une pression de 2100 kPa), selon les normes EN 12607-1 et EN 14769, à une variation de la température de ramollissement bille anneau, déterminée selon la norme EN 1427, inférieure à 16°C et/ou à un maintien de la pénétrabilité à l'aiguille à 25°C, déterminée selon la norme EN 1426, supérieur à 50%.

L'invention a également pour objet l'utilisation d'un hydroxyde XOH avec X = Na ou K, dans une composition bitumineuse qui comprend une base bitume ayant une stabilité intrinsèque S de 1 à 2,5 et/ou un taux de peptisation Sa de 0 à 0,6, lesdites valeurs S et Sa étant mesurées selon la norme ASTM D 7157-12, ladite base bitume représentant au moins 50% en masse, de préférence au moins 80% en masse, et préférentiellement au moins 90% en masse, de la masse totale de la composition bitumineuse, dans laquelle l'hydroxyde XOH avec X = Na ou K est introduit dans la composition bitumineuse, dans une quantité représentant de 0,001 à 1 % en masse, de préférence, de 0,002 à 0,5 % en masse, et préférentiellement de 0,01 à 0,5 % en masse, de la masse totale de la composition bitumineuse, pour améliorer la résistance aux basses températures évaluée selon la norme DIN EN 14771, les % en masse donnés pour la base bitume et l'hydroxyde étant calculés par rapport à la masse totale de la composition bitumineuse incluant l'hydroxyde.

L'invention concerne également l'utilisation d'une composition selon l'invention pour préparer un revêtement d'étanchéité, une membrane ou une couche d'imprégnation.

Un procédé de préparation d'un enrobé comprenant le mélange à chaud d'une composition selon l'invention, avec des granulats, et éventuellement des charges minérales et/ou synthétiques, ainsi que les enrobés comprenant une composition selon l'invention, en mélange avec des granulats, et éventuellement des charges minérales et/ou synthétiques, font également partie intégrante de l'invention.

L'invention concerne également un procédé de préparation d'un asphalte comprenant le mélange à chaud d'une composition selon l'invention, avec des charges minérales et/ou synthétiques, ainsi que les asphaltes comprenant une composition selon l'invention, en mélange avec des charges minérales et/ou synthétiques.

L'invention a également pour objet l'utilisation d'une composition selon l'invention, pour préparer un enduit superficiel, un enrobé à chaud, un enrobé à froid, un enrobé coulé à froid, une grave émulsion ou une couche de roulement, ladite composition étant associée à des granulats et/ou des fraisats de recyclage.

L'invention sera mieux comprise au vu de la description détaillée qui va suivre.

### Définitions

Dans le cadre de l'invention, les termes « comprendre » ou « inclure » et leurs déclinaisons « comprend », « inclut », « comprenant », « incluant » n'exclut pas la présence de un ou plusieurs éléments ou étapes d'un procédé, autre(s) que celui, celle ou ceux spécifié(s). Néanmoins, à moins qu'il n'en soit autrement d'après le contexte, de manière préférée, les termes « comprendre » ou « inclure » et leurs déclinaisons signifient « consister exclusivement en » ou sa déclinaison correspondante.

Dans le cadre de l'invention, quand il est question d'un hydroxyde XOH ,cela inclut un seul hydroxyde XOH, tout comme un ou plusieurs hydroxydes XOH ; quand il est fait référence à une base bitume ayant une stabilité intrinsèque S de 1 à 2,5 et/ou un taux de peptisation Sa de 0 à 0,6, cela inclut un seule base bitume, aussi bien qu'une ou plusieurs base(s) bitume ayant une stabilité intrinsèque S de 1 à 2,5 et/ou un taux de peptisation Sa de 0 à 0,6 ; quand il est fait référence à un composant hydrocarboné, cela inclut un seul composant hydrocarboné, aussi bien qu'un ou plusieurs composants hydrocarbonés ; lorsqu'il est fait référence à la description ou à l'invention, cela inclut un seul ou plusieurs aspects, tel(s) que décrit(s) dans le présent texte. Les différents aspects décrits dans le présent texte sont inclus sous le terme « invention ».

Donc, en particulier, lorsqu'il est fait référence à un hydroxyde XOH, il faut entendre au moins un hydroxyde XOH (NaOH ou KOH) et donc un seul hydroxyde NaOH ou KOH, tout comme un mélange d'hydroxydes NaOH et KOH ; quand il est fait référence à un composant hydrocarboné, une base bitume ou un bitume de grade mou, cela inclut un seul de ces éléments ou une combinaison ou un mélange de un ou plusieurs de ces éléments. Néanmoins, de manière préférée, ces termes désignent un seul de ces éléments.

Dans le présent texte, « hydroxyde » et « hydroxyde XOH » sont utilisés de manière interchangeable et désignent NaOH, KOH et leurs mélanges.

De même, « base bitume ayant une stabilité intrinsèque S de 1 à 2,5 et/ou un taux de peptisation Sa de 0 à 0,6 » et « base bitume » sont utilisés de manière interchangeable, à moins qu'il ressorte clairement du contexte qu'il est question d'une autre base bitume.

Dans le présent texte, à moins qu'il en soit spécifié autrement, lorsqu'il est fait référence à une norme, il s'agit de la dernière version de cette norme disponible au 1^{er} décembre 2019.

### Base bitume

Les compositions bitumineuses selon l'invention comprennent une base bitume qui a une stabilité intrinsèque S de 1 à 2,5 et/ou un taux de peptisation Sa de 0 à 0,6, lesdites valeurs S et Sa étant mesurées selon la norme ASTM D 7157-12. En particulier, une telle base bitume a, à la fois, une stabilité intrinsèque S de 1 à 2,5 et un taux de peptisation Sa de 0 à 0,6.

Dans le présent texte, les valeurs S et Sa sont mesurées selon la norme ASTM D 7157-12.

La méthode de mesure de la stabilité intrinsèque selon la norme ASTM D 7157-12 quantifie la stabilité intrinsèque S de résidus de distillation du pétrole contenant des asphaltènes. Cette stabilité S dépend du caractère aromatique des asphaltènes, indexé par la valeur Sa et du caractère aromatique du milieu. Cette méthode permet ainsi de caractériser les coupes de pétrole issues de procédé de distillation du pétrole. Cette méthode permet, notamment, de différentier les résidus de distillation du pétrole en fonction de leur stabilité intrinsèque S et du caractère aromatique des asphaltènes quantifié par le taux de peptisation des asphaltène Sa.

La valeur minimale de S est de 1. Cette valeur 1 indique une forte instabilité, avec une forte tendance des asphaltènes à précipiter. Plus la valeur de S est élevée, plus la base bitume est stable avec une faible tendance des asphaltènes à précipiter.

La valeur Sa est liée à la longueur et au nombre de chaines aromatiques dans les asphaltènes. Plus la valeur Sa est élevée, plus les asphaltènes dans la base bitume sont peptisables dans un système colloïdal.

Dans le cadre de l'invention, la base bitume utilisée dans les compositions de l'invention est, de préférence, un mélange de produits issus de la viscoréduction de résidus de distillation sous pression réduite, lesdits résidus de distillation sous pression réduite provenant de la distillation sous pression réduite de résidus atmosphériques, eux-mêmes issus de la distillation directe sous pression atmosphérique du pétrole. On pourra les nommer pour des raisons de simplicité, des résidus de distillation sous pression réduite (ou sous vide) viscoréduits, ou encore résidus viscoréduits.

Les procédés de distillation sous pression atmosphérique et de distillation sous pression réduite, utilisés dans le raffinage du pétrole sont bien connus de l'homme de l'art, comme rapporté dans la présentation du domaine technique de l'invention. Tout procédé de distillation sous pression atmosphérique, conduisant à un résidu de distillation sous pression atmosphérique et tout procédé de distillation sous pression réduite mené sur un ou des résidus de distillation sous pression atmosphérique, et conduisant à un résidus de distillation sous pression réduite (ou sous vide) peuvent être utilisés.

Les opérations de viscoréduction consistent à craquer thermiquement des fractions lourdes (en l'occurrence les résidus de distillation sous pression réduite) à une température dans la gamme allant de 420 °C à 500 °C, de préférence dans la gamme allant de 450°C à 460°C, sans apport d'hydrogène. La viscoréduction est, en général, réalisée sous une pression dans la gamme allant de 5 000 et 20 000 hPa. Ces produits issus de la viscoréduction de résidus de distillation sous vide comprennent des asphaltènes instables à l'état colloïdal, relativement aux bitumes conventionnels issus de la distillation directe du pétrole (atmosphérique et/ou sous vide). L'instabilité des asphaltènes se traduit généralement par une dégradation des performances à froid. Cette dégradation des performances à froid est corrigée dans le cadre de l'invention, par ajout d'hydroxyde.

De préférence, la base bitume utilisée dans le cadre de l'invention, présente une pénétrabilité à l'aiguille à 25°C de 1 à 250 1/10 mm, de préférence de 5 à 100 1/10 mm, plus préférentiellement de 5 à 40 1/10 mm, encore plus avantageusement de 10 à 30 1/10 mm, étant entendu que la pénétrabilité est mesurée selon la norme EN 1426.

De préférence, la base bitume utilisée dans le cadre de l'invention selon l'invention présente une température de ramollissement bille et anneaux (TBA) comprise entre 35°C et 100°C, de préférence de 40°C à 85°C, plus préférentiellement de 50°C à 80°C et encore plus avantageusement de 55°C à 70 °C, la TBA étant mesurée selon la norme EN 1427.

La base bitume utilisée dans le cadre de l'invention, si elle n'est pas modifiée conformément à l'invention par incorporation d'hydroxyde ne répond pas aux exigences routières. En particulier, après vieillissement RTFOT (à une température de 163°C, pendant 75 minutes et sous débit d'air de 4 litres/min) selon la norme EN 12607-1, la variation de la température de ramollissement bille anneau de la base bitume, déterminée selon la norme EN 1427, est supérieure à 8°C, notamment de 8 à 20 °C. De même, le maintien de la pénétrabilité à l'aiguille à 25°C de ladite base bitume, déterminée selon la norme EN 1426, est inférieur ou égal à 60%, notamment de 10 à 60%. Par ailleurs, après vieillissement RTFOT (à une température de 163°C, pendant 75 minutes et sous débit d'air de 4 litres/min) + PAV (à une température de 100°C, pendant 20 heures et à une pression de 2100 kPa), selon les normes EN 12607-1 et EN 14769, la variation de la température de ramollissement bille anneau de la base bitume, déterminée selon la norme EN 1427, est supérieure à 16°C, notamment de 16 à 30°C.

Grâce à l'invention, il est possible d'obtenir des compositions qui combinent une telle base bitume et de l'hydroxyde, de manière à atteindre les exigences routières. Aussi, après vieillissement RTFOT (à une température de 163°C, pendant 75 minutes et sous débit d'air de 4 litres/min), selon la norme EN 12607-1, la variation de la température de ramollissement bille anneau de ladite composition, déterminée selon la norme EN 1427, est inférieure à 8°C et/ou le maintien de la pénétrabilité à l'aiguille à 25°C de ladite composition, déterminée selon la norme EN 1426, est supérieur à 60%. Par ailleurs, après vieillissement RTFOT (à une température de 163°C, pendant 75 minutes et sous débit d'air de 4 litres/min) + PAV (à une température de 100°C, pendant 20 heures et à une pression de 2100 kPa), selon les normes EN 12607-1 et EN 14769, la variation de la température de ramollissement bille anneau de ladite composition, déterminée selon la norme EN 1427, est inférieure à 16°C et/ou le maintien de la pénétrabilité à l'aiguille à 25°C de ladite composition, déterminée selon la norme EN 1426, est supérieur à 50%.

### Hydroxyde

L'invention concerne les compositions dont au moins 50% en masse, et de préférence au moins 80% en masse, et préférentiellement au moins 90% en masse, de la masse totale de la composition, est constituée d'une base bitume ayant une stabilité intrinsèque S de 1 à 2,5 et/ou un taux de peptisation Sa de 0 à 0,6, modifiées par introduction d'un hydroxyde XOH dans lequel X = Na ou K, avec de préférence X=Na.

Dans le cadre de l'invention, quand il est question d' « hydroxyde XOH » ou d' « hydroxyde », il s'agit d'un hydroxyde XOH dans lequel X = Na ou K, avec de préférence X=Na (ce qui correspond à la soude).

Dans le cadre de l'invention, un tel hydroxyde est utilisé dans une composition dont au moins 50% en masse, et de préférence au moins 80% en masse, et préférentiellement au moins 90% en masse, de la masse totale de la composition, est constituée d'une base bitume ayant une stabilité intrinsèque S de 1 à 2,5 et/ou un taux de peptisation Sa de 0 à 0,6, pour améliorer les propriétés de résistance au vieillissement de la composition et/ou pour améliorer ses performances à froid, et notamment sa résistance à la fissuration aux basses températures.

En particulier, un hydroxyde XOH avec X = Na ou K peut être introduit dans une telle base bitume représentant au moins 50% en masse, de préférence au moins 80% en masse, et préférentiellement au moins 90% en masse, de la masse totale d'une composition bitumineuse, pour améliorer les propriétés de ladite composition, plus précisément pour améliorer la résistance au vieillissement sous RTFOT (à une température de 163°C, pendant 75 minutes et sous débit d'air de 4 litres/min) réalisé selon la norme EN 1426 et/ou la résistance au vieillissement sous RTFOT (à une température de 163°C, pendant 75 minutes et sous débit d'air de 4 litres/min) + PAV (à une température de 100°C, pendant 20 heures et à une pression de 2100 kPa) réalisés selon les normes EN 12607-1 et EN 14769.

De manière avantageuse, l'hydroxyde XOH avec X = Na ou K, peut être introduit, dans une composition bitumineuse qui comprend une base bitume ayant une stabilité intrinsèque S de 1 à 2,5 et/ou un taux de peptisation Sa de 0 à 0,6 (mesurées selon la norme ASTM D 7157-12), ladite base bitume représentant au moins 50% en masse, de préférence au moins 80% en masse, et préférentiellement au moins 90% en masse, de la masse totale de la composition bitumineuse, dans une quantité représentant de 0,001 à 1 % en masse, de préférence, de 0,002 à 0,5 % en masse, et préférentiellement de 0,01 à 0,5 % en masse, de la masse totale de la composition bitumineuse, de manière à conduire :
- après vieillissement RTFOT (à une température de 163°C, pendant 75 minutes et sous débit d'air de 4 litres/min), selon la norme EN 12607-1, à une variation de la température de ramollissement bille anneau, déterminée selon la norme EN 1427, inférieure à 8°C et/ou à un maintien de la pénétrabilité à l'aiguille à 25°C, déterminée selon la norme EN 1426, supérieur à 60% ; et/ou
- après vieillissement RTFOT (à une température de 163°C, pendant 75 minutes et sous débit d'air de 4 litres/min) + PAV (à une température de 100°C, pendant 20 heures et à une pression de 2100 kPa), selon les normes EN 12607-1 et EN 14769, à une variation de la température de ramollissement bille anneau, déterminée selon la norme EN 1427, inférieure à 16°C et/ou à un maintien de la pénétrabilité à l'aiguille à 25°C, déterminée selon la norme EN 1426, supérieur à 50%.

L'hydroxyde XOH avec X = Na ou K, peut également être introduit dans une composition bitumineuse qui comprend une base bitume ayant une stabilité intrinsèque S de 1 à 2,5 et/ou un taux de peptisation Sa de 0 à 0,6, lesdites valeurs S et Sa étant mesurées selon la norme ASTM D 7157-12, ladite base bitume représentant au moins 50% en masse, de préférence au moins 80% en masse, et préférentiellement au moins 90% en masse, de la masse totale de la composition bitumineuse, dans une quantité représentant de 0,001 à 1 % en masse, de préférence, de 0,002 à 0,5 % en masse, et préférentiellement de 0,01 à 0,5 % en masse, de la masse totale de la composition bitumineuse, pour améliorer la résistance aux basses températures évaluée selon la norme DIN EN 14771, les % en masse donnés pour la base bitume et l'hydroxyde étant calculés par rapport à la masse totale de la composition bitumineuse incluant l'hydroxyde. De manière avantageuse, l'amélioration de la résistance aux basses températures est de l'ordre de 10 à 50%, de préférence de 15 à 50%, et préférentiellement de 20 à 50%.

De manière avantageuse, la variation après vieillissement RTFOT de T(S=300MPa) d'une base bitume ayant une stabilité intrinsèque S de 1 à 2,5 et/ou un taux de peptisation Sa de 0 à 0,6, est au moins 40%, de préférence au moins 50 % plus élevée que la variation après RTFOT de la composition selon l'invention.

De manière avantageuse, la variation après RTFOT de T(m=0,3) d'une base bitume ayant une stabilité intrinsèque S de 1 à 2,5 et/ou un taux de peptisation Sa de 0 à 0,6, est au moins 40%, de préférence au moins 50 % plus élevée que la variation après RTFOT de la composition selon l'invention.

Le vieillissement RTFOT est réalisé comme décrit dans le cadre de l'invention.

L'hydroxyde peut être ainsi utilisé pour modifier toute composition dont au moins 50% en masse, et de préférence au moins 80% en masse, et préférentiellement au moins 90% en masse, de la masse totale de la composition, est constituée d'une base bitume ayant une stabilité intrinsèque S de 1 à 2,5 et/ou un taux de peptisation Sa de 0 à 0,6, que cette composition comprenne uniquement une telle base bitume ou qu'elle comporte un additif envisagé dans le cadre de l'invention.

En particulier, l'hydroxyde XOH, peut être utilisé sous la forme d'une composition hydrocarbonée **IC** comprenant un composant hydrocarboné **CH** et l'hydroxyde XOH. Une composition hydrocarbonée **IC** sera, de préférence, exclusivement constituée d'un mélange de l'hydroxyde XOH et d'un composant hydrocarboné **CH.** De manière avantageuse, l'hydroxyde XOH se trouve dans une telle composition hydrocarbonée **IC** sous la forme de particules avec au moins 80% en nombre desdites particules qui ont une taille maximale dans la gamme de 10 à 100 µm, de préférence dans la gamme de 20 à 60 µm. Une telle taille de particules permet de mieux contrôler et d'ajuster de manière optimale les propriétés de la composition bitumineuse obtenue. La taille maximale d'une particule qui, en général, est de forme irrégulière, correspond à sa plus grande dimension, notamment mesurée avec un microscope, et de préférence un microscope à lumière visible. Lorsqu'une composition hydrocarbonée **IC** est utilisée, l'hydroxyde XOH représente, de manière avantageuse de 15 à 50% en masse, notamment de 15 à 25% en masse, de la masse de ladite composition hydrocarbonée **IC.** Une telle composition hydrocarbonée **IC** est, alors, introduite dans la composition initiale comprenant la base bitume sélectionnée.

### Composant hydrocarboné

Dans les compositions bitumineuses selon l'invention, l'hydroxyde XOH, peut être introduit, par l'intermédiaire d'une composition hydrocarbonée **IC** comprenant en plus de l'hydroxyde XOH un composant hydrocarboné **CH.** Dans de tels cas, le composant hydrocarboné **CH** va donc se retrouver également dans la composition bitumineuse selon l'invention. En particulier, une composition bitumineuse selon l'invention comprend un composant hydrocarboné **CH,** notamment choisi parmi les huiles hydrocarbonées, les bitumes de grade mou, les bitumes fluxés, les bitumes fluidifiés et leurs mélanges, ledit composant hydrocarboné **CH** représentant de préférence au plus 10% en masse, préférentiellement 0,1 à 10% en masse, de manière plus préférée 0,5 à 8% en masse, et de manière encore plus préférée 1 à 5% en masse, de la masse totale de la composition bitumineuse selon l'invention.

Dans la présente invention, par « composant hydrocarboné », on entend un hydrocarbure, ou un composant comprenant un hydrocarbure, ou composé essentiellement d'un hydrocarbure ou d'un mélange d'hydrocarbures. Un hydrocarbure est composé entièrement d'atomes d'hydrogène et de carbone, ledit composé pouvant être saturé ou insaturé, cyclique ou acyclique. Les alcanes, cycloalcanes, alcènes, alcynes et hydrocarbures aromatiques, notamment les arènes, sont différents exemples d'hydrocarbures. A titre d'exemples préférés de composant hydrocarboné **CH** pouvant être utilisés dans le cadre de l'invention, on peut citer les huiles hydrocarbonées et les bitumes. Le composant hydrocarboné ne correspond pas, de préférence, à une base bitume ayant une stabilité intrinsèque S de 1 à 2,5 et/ou un taux de peptisation Sa de 0 à 0,6.

De manière avantageuse, le composant hydrocarboné **CH** est un bitume, de préférence un bitume de grade mou tel que défini dans la norme EN 12591 (version 2009), par exemple sous la référence V1500, V3000, V6000 ou V12000 ; ou un bitume fluxé ou fluidifié tel que défini dans la norme EN 15322 (version 2013), par exemple référencé Fm 3-225 X 0, Fm 4-75 X 0, Fm 4-150 X 0, Fm 4-300 X 0, Fm 8 x 0, Fv 3-30 X 0, Fv 3-60 X 0, Fv 3-120 X 0, Fv 5-60 X 0, Fv 5-180 X 0, Fv 8 x 0 ou Fv 9 x 0.

D'autres exemples adaptés de composant hydrocarboné **CH** pouvant être utilisés dans le cadre de l'invention, autres que les bitumes, sont les huiles hydrocarbonées. De telles huiles peuvent être des huiles minérales, des huiles synthétiques, des huiles fluxées, des alcanes, telle que l'huile de cylindre, commercialisée par TOTAL sous la référence 1000 N. Quand une huile est utilisée, elle est de préférence neutre ou basique.

Le composant hydrocarboné **CH** présente, de préférence, une viscosité cinématique à 60 °C, dans la gamme allant de 50 à 20 000 mm²/s, de préférence dans la gamme allant 50 à 150 mm²/s. Une telle viscosité cinématique peut être mesurée selon la norme EN 12595. Avec une telle viscosité, la composition hydrocarbonée **IC** comprenant l'hydroxyde XOH et le composant hydrocarboné **CH** pourra être préparée avec des agitateurs traditionnels, notamment des agitateurs à pales.

Selon une caractéristique avantageuse, le composant hydrocarboné **CH** a une transmittance de la lumière à une longueur d'onde de 900 nm d'au moins 0,03%. Cette transmittance peut être mesurée en utilisant un photomètre tel que le photomètre Hach Lange DR 3900 en particulier avec une cuvette optique en verre de 1cm. Avec une telle transmittance, il est possible de vérifier, notamment par microscopie sous lumière visible, que l'hydroxyde XOH se trouve bien sous la forme de particules dans la composition hydrocarbonée **IC**, et vérifier la taille desdites particules. En particulier, il sera vérifié que l'hydroxyde XOH se trouve dans la composition **IC** sous la forme de particules présentant une taille maximale inférieure ou égale à 100 µm, de préférence inférieure ou égale à 60 µm et notamment, qu'elles ont une taille maximale moyenne dans la gamme de 10 à 100 µm, de préférence dans la gamme de 20 à 60 µm.

### Additif(s)

Les compositions bitumineuses selon l'invention peuvent comprendre exclusivement une base bitume qui a une stabilité intrinsèque S de 1 à 2,5 et/ou un taux de peptisation Sa de 0 à 0,6 et un hydroxyde XOH tels que décrits dans le cadre de l'invention, peuvent comprendre exclusivement une base bitume qui a une stabilité intrinsèque S de 1 à 2,5 et/ou un taux de peptisation Sa de 0 à 0,6, un hydroxyde XOH et un composant hydrocarboné **CH** tels que décrits dans le cadre de l'invention, ou bien peuvent inclure également un ou plusieurs additifs.

En particulier, si l'hydroxyde XOH est introduit par l'intermédiaire d'une composition hydrocarbonée **IC** comprenant un composant hydrocarboné **CH,** la composition bitumineuse selon l'invention comprendra un tel composant hydrocarboné **CH.**

Aussi, l'invention concerne les compositions bitumineuses qui comprennent, en plus de la base bitume qui a une stabilité intrinsèque S de 1 à 2,5 et/ou un taux de peptisation Sa de 0 à 0,6 et de l'hydroxyde, un composant hydrocarboné **CH,** de préférence choisi parmi les huiles hydrocarbonées, les bitumes de grade mou, les bitumes fluxés, les bitumes fluidifiés et leurs mélanges, notamment ceux décrits dans la partie « Composant hydrocarboné ».

En général, lorsqu'il est présent, ledit composant hydrocarboné **CH** représente, de préférence, au plus 10% en masse, préférentiellement 0,1 à 10% en masse, de manière plus préférée 0,5 à 8% en masse, et de manière encore plus préférée 1 à 5% en masse, de la masse totale de la composition bitumineuse selon l'invention.

Par ailleurs, les compositions bitumineuses selon l'invention peuvent inclure un ou plusieurs additifs, dont l'incorporation a déjà été décrite dans des compositions de bitumes.

En particulier, les compositions bitumineuses selon l'invention peuvent inclure un promoteur d'adhésion, notamment choisi parmi les amines, diamines, polyamines, alkyl amido amines, amidopolyamines, imidazolines, et leurs mélanges. De tels promoteurs d'adhésion sont notamment décrits dans la demande WO 2018/206489 à laquelle on pourra se référer pour plus de détails.

En particulier, un tel promoteur d'adhésion est choisi parmi :
i) Les amines de formule (I): 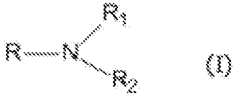 dans laquelle :
   - R est un groupe hydrocarboné saturé ou insaturé, substitué ou non substitué, optionnellement branché ou cyclique, comprenant 8 à 24 atomes de carbone, par exemple, R est un groupe hydrocarboné dérivé des acides gras de la suie ou des acides gras de l'huile de tall ; et
   - R₁ et R₂, identiques ou différents, sont un atome d'hydrogène ou un groupe hydrocarboné comprenant de 1 à 24 atomes de carbone; R₁ et R₂ sont, de préférence, un atome d'hydrogène ou un groupe méthyle;
ii) Les diamines et les polyamines de formule (II) :

   R-(NH-L)ₙ-NH₂ (II)

   dans laquelle :
   - R est tel que défini pour (I),
   - L représente une chaine hydrocarbonée linéaire ou branchée comprenant de 1 à 6 atomes de carbone, par exemple Lest -(CH₂)m- avec m = 1, 2 ou 3 et,
   - n est un entier supérieur ou égal à 1, en particulier, n est égal à 1, 2, 3, 4, 5 ou 6,
iii) Les alkyl amido amines de formule (III) : 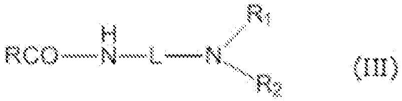 dans laquelle R, R₁, R₂ et L sont tels que définis pour (I) et (II);
iv) Les amidopolyamines de formule (IV) et les imidazolines :

   RCO-(NH-L)p-NH₂ (IV)

   dans laquelle R et L sont tels que définis pour (I) et (II), et p est un entier supérieur ou égal à 1, en particulier p est un entier dans la gamme allant de 1 à 10.

De manière avantageuse, le promoteur d'adhésion est sélectionné parmi les amines, diamines, polyamines, alkyl amido amines et amidopolyamines comprenant une chaine grasse, et en particulier parmi celles précédemment décrites. En particulier, le promoteur d'adhésion est un amidopolyamine comprenant une chaine grasse, de formule :

RCO-[NH-L]p-NH₂ (IV)

où :
- p est un entier supérieur ou égal à 1, en particulier p est un entier dans la gamme allant de 1 à 10,
- L représente une chaine hydrocarbonée linéaire ou branchée comprenant de 1 à 6 atomes de carbone, par exemple L est -(CH₂)m- avec m = 1, 2 ou 3,
- R est un groupe hydrocarboné saturé ou insaturé, substitué ou non substitué, optionnellement branché ou cyclique, comprenant 8 à 24 atomes de carbone.

De manière préférée, le promoteur d'adhésion utilisé dans les compositions bitumineuses selon l'invention est un mélange d'amidopolyamines de formula (IV) dans laquelle p est un entier dans la gamme allant de 1 à 10, L est -(CH₂)₂-, et R correspond aux chaines hydrocarbonées des acides gras de l'huile de tall.

En général, lorsqu'il est présent, ledit promoteur d'adhésion représente, de préférence, 0,01 à 2 % en masse, préférentiellement 0,05% à 1% en masse, et de manière encore plus préférée 0,1 à 0,3 % en masse, de la masse totale de la composition bitumineuse selon l'invention.

Il est également possible d'inclure, comme cela est fait, dans certaines compositions de bitume, un ou plusieurs polymères.

Les compositions bitumineuses selon l'invention peuvent inclure un agent (nommé agent réducteur de température) permettant d'abaisser la température à laquelle les compositions bitumineuses selon l'invention peuvent être utilisées de manière satisfaisante, en tant que liant. A titre d'exemple de réducteurs de température, on peut citer à titre d'exemple, les dérivés de l'huile de tall (Tall Oil), pris seuls ou en mélange avec un monoester d'un mélange d'acides gras, tels que ceux décrits dans le document WO 2010/134024. On peut également citer, comme additifs appropriés selon l'invention, les additifs décrits dans le document WO 2012/049579 et dans le document WO 2014/095995. De préférence, on utilise des agents notamment commercialisés par Arkema, sous la référence Cecabase RT bio 10, notamment.

En général, lorsqu'il est présent, ledit réducteur de température représente, de préférence, 0,01 à 3 % en masse, et préférentiellement 0,05 à 0,3 % en masse, de la masse totale de la composition bitumineuse selon l'invention.

### Procédé de préparation des compositions bitumineuses selon l'invention

Les compositions bitumineuses de l'invention peuvent être préparées par tout procédé adapté, bien connu de l'homme du métier. En règle générale, ces procédés comprennent le mélange des composants et le chauffage du mélange.

L'hydroxyde peut être directement introduit dans une composition bitumineuse initiale, directement sous la forme d'une poudre ou sous la forme d'une solution dans un solvant adéquat. En tant qu'exemple de solvant permettant de solubiliser l'hydroxyde, on peut citer l'eau ou le méthanol. L'hydroxyde peut être présent dans une telle solution, par exemple à une concentration de 10 à 50% en masse par rapport à la masse totale de la solution. Un solvant approprié aura de préférence un point d'ébullition inférieur ou égal à 100°C à 1013,3 hPa. Il sera choisi, de préférence de telle sorte qu'il s'évapore spontanément, lorsque la solution d'hydroxyde est incorporée dans la composition bitumineuse initiale.

Qu'il soit introduit directement sous la forme d'une poudre ou d'une solution dans un solvant approprié, la quantité introduite est sélectionnée, de manière à obtenir au final dans la composition bitumineuse selon l'invention, une quantité d'hydroxyde qui représente de 0,001 à 1% en masse, de préférence 0,002 à 0,5 % en masse, et préférentiellement de 0,01 à 0,5 % en masse, de la masse totale de la composition bitumineuse obtenue.

De manière avantageuse, l'hydroxyde est introduit, dans une composition bitumineuse initiale, sous la forme d'une poudre de particules présentant une taille maximale inférieure ou égale à 100 µm, de préférence inférieure ou égale à 60 µm. De manière encore plus préférée, l'hydroxyde est introduit, dans une composition bitumineuse initiale, sous la forme d'une poudre de particules présentant une taille maximale moyenne dans la gamme allant de 10 à 100 µm, de préférence allant de 20 à 60 µm. Une poudre anhydre sera, de préférence, utilisée. La taille maximale moyenne des particules correspond à la moyenne arithmétique des tailles maximales d'un ensemble de particules, de préférence d'au moins 20 particules, et notamment de 20 particules. La taille maximale peut être mesurée par microscopie. La taille des particules introduites peut être ajustée par différentes techniques notamment par broyage et/ou tamisage.

Selon un mode de réalisation préféré, l'hydroxyde, en particulier, sous la forme de particules, est introduit grâce à une composition hydrocarbonée **IC.**

Une telle composition hydrocarbonée **IC** comprend, voire est constituée exclusivement de, l'hydroxyde réparti dans un composant hydrocarboné **CH** tel que précédemment décrit.

En particulier, l'hydroxyde représente, de préférence, 15 à 50 % et préférentiellement 15 à 25 % en masse, de la masse totale de la composition hydrocarbonée **IC**. De manière analogue à ce qui est décrit dans le cas d'une introduction directe de l'hydroxyde dans la composition bitumineuse initiale, l'hydroxyde peut être introduit dans le composant hydrocarboné **CH**, directement sous la forme d'une poudre ou sous la forme d'une solution dans un solvant adéquat. Mais, de manière avantageuse, l'hydroxyde est introduit, dans la composition hydrocarbonée **IC**, sous la forme d'une poudre de particules présentant une taille maximale inférieure ou égale à 100 µm, de préférence inférieure ou égale à 60 µm. De manière encore plus préférée, l'hydroxyde est introduit, dans la composition hydrocarbonée **IC**, sous la forme d'une poudre de particules présentant une taille maximale moyenne dans la gamme allant de 10 à 100 µm, de préférence allant de 20 à 60 µm. Une poudre anhydre sera, de préférence, utilisée.

De manière avantageuse, le composant hydrocarboné **CH**, de la composition hydrocarbonée **IC**, présente une transmittance de la lumière, à une longueur d'onde de 900 nm, d'au moins 0,03%. Une telle transmittance peut être mesurée à l'aide d'un photomètre tel qu'un photomètre Hack Lange DR 3900, en particulier ayant une cuve en verre de 1 cm. Avec un telle transmittance, il est possible de contrôler par microscopie, et en particulier par microscopie sous lumière visible, que l'hydroxyde forme bien des particules dans la gamme de taille souhaitée, dans la composition hydrocarbonée **IC**. En général, lorsque l'hydroxyde est incorporé dans la composition hydrocarbonée **IC**, sous la forme de particules d'une taille donnée, cette taille est conservée ou sensiblement conservée dans la composition hydrocarbonée **IC**. Le plus souvent, dans la poudre comme dans la composition hydrocarbonée **IC**, les particules d'hydroxyde ne sont pas sphériques et ont des formes irrégulières. Quand il est question de taille des particules dans le cadre de l'invention, on entend donc la taille maximale qui correspond à la plus grande dimension qui peut être mesurée, notamment grâce à un microscope. Cette taille peut directement être mesurée sur la composition **IC**, si la transmittance du composant hydrocarboné **CH** est suffisante.

En particulier dans la composition hydrocarbonée **IC**, l'hydroxyde forme des particules dont au moins 80% en nombre ont une taille maximale dans la gamme allant de 10 à 100 µm, de préférence, dans la gamme allant de 20 à 60 µm et/ou qui ont une taille maximale inférieure ou égale à 100 µm, de préférence inférieure ou égale à 60 µm. De manière encore plus préférée, l'hydroxyde XOH se trouve dans la composition **IC** sous la forme de particules présentant une taille maximale moyenne dans la gamme de 10 à 100 µm, de préférence dans la gamme de 20 à 60 µm. Par contre, la taille des particules d'hydroxyde ne peut pas être vérifiée dans la composition bitumineuse, selon l'invention.

Par ailleurs, l'utilisation d'une composition hydrocarbonée **IC** comprenant l'hydroxyde, permet de protéger l'hydroxyde contre l'humidité et de favoriser son stockage, avant son introduction dans la composition bitumineuse initiale.

De manière avantageuse, une telle composition hydrocarbonée **IC** comprend un composant hydrocarboné présentant une viscosité cinématique à 60 °C mesurée selon la norme EN 12595 dans la gamme allant de 50 à 20 000mm²/s, de préférence dans la gamme allant de 50 à 150 mm²/s. Avec de telles viscosités, la préparation d'une telle composition et l'introduction de l'hydroxyde nécessitent un dispositif de mélange classique, tels que des agitateurs à pales.

En particulier, la préparation d'une composition hydrocarbonée **IC** pourra être effectuée par mélange du composant hydrocarboné **CH** et de l'hydroxyde à une température dans la gamme allant de 30 à 220°C, de préférence dans la gamme allant de 40 à 190°C et/ou avec une agitation dans la gamme allant de 300 à 800 tr/min, de préférence dans la gamme de 500 à 650 tr/min et/ou pendant une durée de 10 à 120 minutes, de préférence de 10 à 20 minutes. Les paramètres du mélange et la température seront ajustés par l'homme du métier, en fonction du composant hydrocarboné **CH** sélectionné.

Lors de la préparation d'une telle composition hydrocarbonée **IC**, le composant hydrocarboné **CH** pourra être chauffé à une température à laquelle il se trouve à l'état liquide, de manière à favoriser l'incorporation et la répartition de l'hydroxyde. Par exemple, une température juste suffisante pour obtenir la fusion du composant hydrocarboné **CH** pourra être utilisée, notamment lorsque l'hydroxyde est introduit sous la forme d'une poudre. Lorsque l'hydroxyde est introduit sous la forme d'une solution dans un solvant, de préférence, le composant hydrocarboné **CH** sera soumis à un chauffage adapté pour obtenir l'évaporation spontanée du solvant, de manière simultanée à l'incorporation de la solution d'hydroxyde.

Lorsque l'hydroxyde est introduit par l'intermédiaire d'une composition hydrocarbonée **IC**, la quantité présente dans cette composition va déterminer la quantité de composition hydrocarbonée **IC** introduite. En effet, cette composition hydrocarbonée **IC** est introduite en quantité telle dans la composition bitumineuse initiale, de manière à obtenir au final dans la composition bitumineuse selon l'invention, une quantité d'hydroxyde qui représente de 0,001 à 1% en masse, de préférence de 0,002 à 0,5 % en masse, et préférentiellement, de 0,01 à 0,5 % en masse, de la masse totale de la composition bitumineuse obtenue.

En général, le pourcentage massique de l'hydroxyde dans la composition hydrocarbonée **IC** est au moins 30 fois égal au pourcentage massique d'hydroxyde dans la composition bitumineuse finale et, de préférence, au plus 100 fois égal au pourcentage massique de l'hydroxyde dans la composition bitumineuse finale selon l'invention.

Le procédé de préparation des compositions bitumineuse selon l'invention peut inclure la préparation d'une composition hydrocarbonée **IC**, lorsqu'une telle composition est utilisée pour introduire l'hydroxyde dans la composition bitumineuse initiale. Il est également possible que le procédé de préparation des compositions bitumineuse selon l'invention comporte une étape de stockage de la composition hydrocarbonée **IC** pendant au moins une heure et par exemple pendant une durée de 1 à 30 jours, notamment à une température dans la gamme allant de 10 à 40 °C et, de préférence, à une température dans la gamme allant de 20 à 30 °C, et, notamment à l'air ambiant. La composition hydrocarbonée **IC** est assez stable dans de telles conditions, de sorte qu'une même composition hydrocarbonée **IC** avec des caractéristiques spécifiques pourra être utilisée pour la préparation de plusieurs compositions bitumineuses. De plus, la composition hydrocarbonée **IC** peut être stockée et transportée sans précaution particulière, contrairement à l'hydroxyde XOH.

Selon des modes de réalisation, qui peuvent être combinés aux précédents, avant l'addition de l'hydroxyde dans la composition bitumineuse initiale, le procédé selon l'invention peut comprendre une étape de vérification, par exemple par microscopie, et de manière avantageuse par microscopie à la lumière visible, que l'hydroxyde forme des particules dans la composition hydrocarbonée **IC** avec au moins 80% en nombre desdites particules qui ont une taille maximale dans la gamme allant de 10 à 100 µm et préférentiellement dans la gamme allant de 20 à 60 µm et/ou que lesdites particules ont une taille maximale inférieure ou égale à 100 µm, de préférence inférieure ou égale à 60 µm. De manière encore plus préférée, le procédé selon l'invention peut comprendre une étape de vérification, par exemple par microscopie, et de manière avantageuse par microscopie à la lumière visible, que l'hydroxyde XOH se trouve dans la composition **IC** sous la forme de particules présentant une taille maximale moyenne dans la gamme de 10 à 100 µm, de préférence dans la gamme de 20 à 60 µm.

Lorsqu'une composition intermédiaire **IC** est utilisée, avant son introduction dans la composition bitumineuse initiale, la composition hydrocarbonée **IC** sera, de préférence, chauffée à une température dans la gamme allant de 30 à 50 °C, de préférence dans la gamme allant de 40 à 50 °C, avantageusement sous agitation et, en particulier, sous une agitation de 300 à 1000 tr/min, de préférence sous une agitation de 400 à 800 tr/min et/ou pendant un temps de 10 à 120 minutes et de préférence pendant un temps de 10 à 20 minutes. Une température basse, de préférence de 40 à 50 °C, est également avantageuse, pour favoriser le contrôle de la taille des particules d'hydroxyde XOH.

Une telle température est, en particulier, utilisée, lorsque le composant hydrocarboné **CH** présente une viscosité cinématique à 60 °C dans la gamme allant de 20 à 20 000mm²/s, de préférence dans la gamme allant de 50 à 150 mm²/s. Là encore, les paramètres de mélange et la température seront ajustés par l'homme du métier en fonction du composant hydrocarboné **CH** sélectionné.

De manière classique, l'hydroxyde, que celui-ci soit introduit directement sous la forme d'une poudre, d'une solution ou d'une composition hydrocarbonée **IC**, se fera, dans la composition bitumineuse initiale, sous mélange et chauffage. En général, la composition bitumineuse initiale sera chauffée sous agitation, avant l'incorporation de l'hydroxyde. Les paramètres de mélange et de chauffage seront ajustés par l'homme du métier en fonction des propriétés de la composition bitumineuse initiale utilisée.

L'incorporation des particules d'hydroxyde, que ce dernier soit sous la forme d'une poudre, d'une solution ou d'une composition hydrocarboné **IC,** pourra, notamment, se faire par mélange à une température dans la gamme allant de 150 à 220 °C, de préférence à une température dans la gamme allant de 160 à 190 °C et/ou sous une agitation dans la gamme allant de 100 à 500 tr/min, de préférence dans la gamme allant de 200 à 400 tr/min et/ ou pendant une durée de 10 à 180 minutes, de préférence pendant une durée 10 à 20 minutes. Là encore, les paramètres d'agitation et de mélange seront ajustés par l'homme du métier en fonction notamment des composants sélectionnés. Le mélange et le chauffage peuvent être maintenus pendant un certain temps à l'issue de l'incorporation, notamment à une température dans la gamme allant de 150 à 220 °C, de préférence à une température dans la gamme allant de 160 à 190 °C et/ou sous une agitation dans la gamme allant de 100 à 500 tr/min, et/ ou pendant une durée de 10 à 240 minutes.

Quel que soit le mode de réalisation utilisé, la composition bitumineuse finale pourra correspondre à la composition directement obtenue à l'issu de l'étape b. Lorsque la composition bitumineuse inclut un ou plusieurs additifs, ce(s) additif(s) pourra(ont) être incorporé(s) dans la composition bitumineuse, avant l'introduction de l'hydroxyde ou introduits après l'hydroxyde. Lorsque la composition comprend plusieurs additifs, il est, également, possible que l'un ou l'autre des additifs soit déjà présent et que un ou plusieurs autre(s) additif(s) soi(en)t introduit(s) après. Selon un mode de réalisation préféré, le procédé selon l'invention comprend après l'étape b, une étape additionnelle correspondant à l'addition d'un additif conduisant à une composition bitumineuse finale.

En particulier, lorsque la composition bitumineuse finale comprend un promoteur d'adhésion tel que décrit dans le cadre de l'invention, un tel promoteur d'adhésion est, de préférence, introduit dans une étape c, postérieure à l'étape b après l'introduction de l'hydroxyde.

Dans le procédé selon l'invention, on nomme composition bitumineuse initiale, la composition comprenant une quantité importante d'une base bitume ayant une stabilité intrinsèque S de 1 à 2,5 et/ou un taux de peptisation Sa de 0 à 0,6, dans laquelle l'hydroxyde est introduit. Cette dernière pourra être constituée exclusivement d'une base bitume ayant une stabilité intrinsèque S de 1 à 2,5 et/ou un taux de peptisation Sa de 0 à 0,6, d'un mélange d'une telle base bitume avec un ou plusieurs additif(s) et/ou une autre base bitume. Les composants de la composition bitumineuse initiale seront présents dans des quantités adaptées pour obtenir les quantités souhaitées dans la composition bitumineuse selon l'invention. Bien que ceci ne soit pas préféré, il n'est pas exclu que la composition bitumineuse initiale comprenne une autre base bitume, et notamment un bitume de grade dur, notamment de grade 10/20 ou 15/25 défini par la norme 13924-1 ou 20/30, 30/45 ou 35/50 défini par la norme EN 12591, mais dans des quantités limitées, de manière à ce qu'au final, la base bitume ayant une stabilité intrinsèque S de 1 à 2,5 et/ou un taux de peptisation Sa de 0 à 0,6, représente au moins 50% en masse, et de préférence au moins 80% en masse, et préférentiellement au moins 90% en masse, de la masse totale de la composition bitumineuse obtenue. En particulier, l'absence d'un bitume de grade dur dans la composition bitumineuse initiale permet de ne réaliser qu'un seul mélange en cuve, l'incorporation de l'hydroxyde pouvant être directement réalisée en ligne.

### Compositions selon l'invention - modes de réalisation préférés

L'invention concerne les compositions bitumineuse comprenant une base bitume ayant une stabilité intrinsèque S de 1 à 2,5 et/ou un taux de peptisation Sa de 0 à 0,6, qui représente au moins 50% en masse, et de préférence au moins 80% en masse, et préférentiellement au moins 90% en masse, de la masse totale de ladite composition bitumineuse et un hydroxyde XOH tels que décrits dans le cadre de l'invention. Lesdites compositions peuvent également inclure un ou plusieurs additifs, en particulier tels que précédemment décrits. Par ailleurs, bien que ces modes de réalisations ne soient pas préférés, il est possible que les compositions selon l'invention comprennent également un bitume de grade dur, notamment de grade 10/20 ou 15/25 défini par la norme 13924-1 ou 20/30, 30/45 ou 35/50 défini par la norme EN 12591. De préférence, lorsqu'il est présent, un tel bitume de grade dur représente au plus 20% en masse de la masse totale de la composition bitumineuse selon l'invention.

Dans les compositions bitumineuses selon l'invention, les différents composants sont répartis dans la base bitume. Une telle répartition est obtenue grâce au mélange appliqué lors de la préparation des compositions selon l'invention.

Certaines des compositions particulièrement préférées dans le cadre de l'invention sont reprises ci-après. Les % donnés sont des % massiques, par rapport à la masse totale de la composition. De manière avantageuse, dans la description ci-après, on utilisera ensemble les premières gammes citées pour les différents composants listés, ou les deuxièmes gammes citées pour les différents composants listés, ou les troisièmes gammes citées pour les différents composants listés.

En particulier, l'invention concerne les compositions comprenant les composants suivants :
- de 60 à 99,999 %, de préférence, de 80 à 99,998 %, et préférentiellement de 90 à 99,99 % d'une base bitume ayant une stabilité intrinsèque S de 1 à 2,5 et/ou un taux de peptisation Sa de 0 à 0,6, et
- de 0,001 à 1 %, de préférence, de 0,002 à 0,5 %, et préférentiellement de 0,01 à 0,5 % d'hydroxyde XOH dans lequel X = Na ou K ; et avantageusement de 0,001 à 1 %, de préférence, de 0,002 à 0,5 %, et préférentiellement de 0,01 à 0,5 % de soude.

Selon certains modes de réalisation, l'invention concerne les compositions comprenant les composants suivants :
- de 60 à 99,899 %, de préférence, de 80 à 99,498 %, et préférentiellement de 90 à 98,99 % d'une base bitume ayant une stabilité intrinsèque S de 1 à 2,5 et/ou un taux de peptisation Sa de 0 à 0,6,
- de 0,001 à 1 %, de préférence, de 0,002 à 0,5 %, et préférentiellement de 0,01 à 0,5 % d'hydroxyde XOH dans lequel X = Na ou K ; et avantageusement de 0,001 à 1 %, de préférence, de 0,002 à 0,5 %, et préférentiellement de 0,01 à 0,5 % de soude,
- de 0,1 à 10 %, de préférence, de 0,5 à 8 %, et préférentiellement de 1 à 5%, d'un composant hydrocarboné **CH,** choisi parmi les huiles hydrocarbonées, les bitumes de grade mou, les bitumes fluxés, les bitumes fluidifiés et leurs mélanges.

Selon certains modes de réalisation, l'invention concerne les compositions constituées exclusivement des composants suivants :
- de 89 à 99,899 %, de préférence, de 91,5 à 99,498 %, et préférentiellement de 94,5 à 98,99 % d'une base bitume ayant une stabilité intrinsèque S de 1 à 2,5 et/ou un taux de peptisation Sa de 0 à 0,6,
- de 0,001 à 1 %, de préférence, de 0,002 à 0,5 %, et préférentiellement de 0,01 à 0,5 % d'hydroxyde XOH dans lequel X = Na ou K ; et avantageusement de 0,001 à 1 %, de préférence, de 0,002 à 0,5 %, et préférentiellement de 0,01 à 0,5 % de soude, et
- de 0,1 à 10 %, de préférence, de 0,5 à 8 %, et préférentiellement de 1 à 5% d'un composant hydrocarboné **CH,** choisi parmi les huiles hydrocarbonées, les bitumes de grade mou, les bitumes fluxés, les bitumes fluidifiés et leurs mélanges.

Selon certains modes de réalisation, l'invention concerne les compositions comprenant les composants suivants :
- de 60 à 99,889 %, de préférence, de 80 à 99,448 %, et préférentiellement de 90 à 98,89 % d'une base bitume ayant une stabilité intrinsèque S de 1 à 2,5 et/ou un taux de peptisation Sa de 0 à 0,6,
- de 0,001 à 1 %, de préférence, de 0,002 à 0,5 %, et préférentiellement de 0,01 à 0,5 % d'hydroxyde XOH dans lequel X = Na ou K ; et avantageusement de 0,001 à 1 %, de préférence, de 0,002 à 0,5 %, et préférentiellement de 0,01 à 0,5 % de soude,
- de 0,1 à 10 %, de préférence, de 0,5 à 8 %, et préférentiellement de 1 à 5% d'un composant hydrocarboné CH, choisi parmi les huiles hydrocarbonées, les bitumes de grade mou, les bitumes fluxés, les bitumes fluidifiés et leurs mélanges,
- de 0,01 à 2 %, de préférence, de 0,05 à 1 %, et préférentiellement de 0,1 à 0,3 % de promoteur d'adhésion, de préférence choisi parmi les amines, diamines, polyamines, alkyl amido amines, amidopolyamines, imidazolines, et leurs mélanges.

Selon certains modes de réalisation, l'invention concerne les compositions constituées exclusivement des composants suivants :
- de 87 à 99,889 %, de préférence, de 90,5 à 99,448 %, et préférentiellement de 94,2 à 98,89 % d'une base bitume ayant une stabilité intrinsèque S de 1 à 2,5 et/ou un taux de peptisation Sa de 0 à 0,6,
- de 0,001 à 1 %, de préférence, de 0,002 à 0,5 %, et préférentiellement de 0,01 à 0,5 % d'hydroxyde XOH dans lequel X = Na ou K ; et avantageusement de 0,001 à 1 %, de préférence, de 0,002 à 0,5 %, et préférentiellement de 0,01 à 0,5 % de soude,
- de 0,1 à 10 %, de préférence, de 0,5 à 8 %, et préférentiellement de 1 à 5% d'un composant hydrocarboné **CH,** choisi parmi les huiles hydrocarbonées, les bitumes de grade mou, les bitumes fluxés, les bitumes fluidifiés et leurs mélanges,
- de 0,01 à 2 %, de préférence, de 0,05 à 1 %, et préférentiellement de 0,1 à 0,3 % de promoteur d'adhésion, de préférence choisi parmi les amines, diamines, polyamines, alkyl amido amines, amidopolyamines, imidazolines, et leurs mélanges.

Bien entendu, la base bitume ayant une stabilité intrinsèque S de 1 à 2,5 et/ou un taux de peptisation Sa de 0 à 0,6 et l'hydroxyde, et le promoteur d'adhésion, et le composant hydrocarboné **CH,** lorsqu'ils sont présents, correspondent, de préférence, à ceux spécifiquement décrits ou préférés dans le cadre de l'invention. En particulier, dans les compositions précédemment décrites, la base bitume ayant une stabilité intrinsèque S de 1 à 2,5 et/ou un taux de peptisation Sa de 0 à 0,6 est un mélange de produits issus de la viscoréduction de résidus de distillation sous pression réduite, lesdits résidus de distillation sous pression réduite provenant de la distillation sous pression réduite de résidus atmosphériques, eux-mêmes issus de la distillation directe sous pression atmosphérique du pétrole.

Les compositions obtenues par mélange des différents composants listés, dans les proportions données, voire obtenues par mélange uniquement des différents composants listés, dans les proportions données, font également partie intégrante de l'invention.

### Utilisation et mise en œuvre des compositions bitumineuses selon l'invention

Diverses utilisations des compositions selon l'invention sont envisagées. En particulier, les compositions selon l'invention peuvent être utilisées en tant que liant en remplacement des bitumes traditionnels. En tant que liant, une composition selon l'invention peut être employée pour préparer une association avec des granulats, notamment routiers. S'agissant des applications routières, l'invention vise notamment des enrobés comme matériaux pour la construction et l'entretien des corps de chaussée et de leur revêtement, ainsi que pour la réalisation de tous travaux de voirie.

Par enrobé, on entend, un mélange d'un liant avec des granulats et éventuellement des charges minérales et/ou synthétiques. L'enrobé comprend une composition telle que décrite dans le cadre de l'invention, en tant que liant et éventuellement des charges minérales et/ou synthétiques, de préférence choisies parmi des fines, du sable, des gravillons et des fraisats de recyclage. Les granulats sont des granulats minéraux et/ou synthétiques, notamment, des fraisats de recyclage, de dimensions supérieures à 2 mm, de préférence comprises entre 2 mm et 20 mm.

Aussi, l'invention a également pour objet un procédé de préparation d'un enrobé comprenant le mélange à chaud d'une composition selon l'invention, avec des granulats, et éventuellement des charges minérales et/ou synthétiques.

Une composition selon l'invention, peut, avantageusement être utilisée pour préparer un enduit superficiel, un enrobé à chaud, un enrobé à froid, un enrobé coulé à froid ou une grave émulsion. S'agissant des applications routières, l'invention vise également des asphaltes comme matériaux pour fabriquer et recouvrir des trottoirs.

Par asphalte, on entend, un mélange de liant avec des charges minérales et/ou synthétiques. Un asphalte comprend une composition telle que décrite dans le cadre de l'invention et des charges minérales telles que des fines, du sable ou des gravillons et/ou des charges synthétiques. Les charges minérales sont constituées de fines (particules de dimensions inférieures à 0,063 mm), de sable (particules de dimensions comprises entre 0,063 mm et 2 mm) et éventuellement de gravillons (particules de dimensions supérieures à 2 mm, de préférence comprises entre 2 mm et 4 mm). Les asphaltes présentent 100% de compacité et sont principalement utilisés pour fabriquer et recouvrir des trottoirs, alors que les enrobés possèdent une compacité inférieure à 100% et sont utilisés pour fabriquer des routes. Contrairement aux enrobés, les asphaltes ne sont pas compactés au rouleau lors de leur mise en place.

Aussi, l'invention a également pour objet un procédé de préparation d'un asphalte comprenant le mélange à chaud d'une composition selon l'invention, avec des charges minérales et/ou synthétiques.

Un autre aspect de l'invention concerne l'utilisation d'une composition selon l'invention dans diverses applications industrielles, notamment pour préparer un revêtement d'étanchéité, une membrane ou une couche d'imprégnation. S'agissant des applications industrielles des compositions selon l'invention, on peut citer la fabrication de membranes d'étanchéité, de membranes anti-bruit, de membranes d'isolation, des revêtements de surface, des dalles de moquette, des couches d'imprégnation.

Les exemples ci-après permettent d'illustrer l'invention, mais n'ont aucun caractère limitatif.

### Réactifs

L'hydroxyde de sodium était anhydre et sa pureté était supérieure à 99%, il se présentait sous la forme de pastilles (CARL ROTH GMBH & Co. KG, Article No 9356.1).

La base bitume a été obtenue par viscoréduction des résidus de la distillation sous vide, issus de la distillation sous vide des résidus de distillation sous pression atmosphérique du pétrole de la raffinerie de Normandie. Sa stabilité intrinsèque S était de 2 et son taux de peptisation Sa de 0,52, lesdites valeurs S et Sa ayant été mesurées selon la norme ASTM D 7157-12.

Le promoteur d'adhésion H1 était un additif aminé : WETFIX BE de Akzo Nobel Surface Chemistry AB (CAS 68910-93-0).

Le bitume fluxé était commercialisé par TOTAL sous la référence SOFT^{®} BITUMEN. Il avait une viscosité cinématique à 60°C selon la norme EN 12595 de 90 mm²/s. Sa transmittance, mesurée à 900 nm avec le photomètre Hach Lange DR 3900 ayant une cuve optique en verre de 1cm, était de 0,1%.

### Evaluation des compositions bitumineuses

Dans les exemples ci-après, les compositions ont été évaluées par :
- la mesure de la pénétrabilité à l'aiguille à 25°C (abréviation : Pene), selon la norme EN 1426, les résultats étant exprimés en 1/10 mm,
- la mesure de la température de ramollissement bille anneau (abréviation : TBA), selon la norme EN 1427, les résultats étant exprimés en °C,
- L'indice de pénétrabilité (sans unité) selon la norme DIN EN 1427 Appendice B,
- La résistance des compositions au durcissement et au vieillissement a été respectivement testée selon la norme DIN EN 12607-1 et les normes DIN EN 12607-1 et EN 14769.
   La norme européenne DIN EN 12607-1 spécifie la méthode de mesure des effets combinés de la chaleur et de l'air sur un film mince d'une composition en renouvellement constant (RTFOT de l'anglais « Rolling Thin Film Oven Test »). Le vieillissement sous RTFOT a été mené à une température de 163°C, pendant 75 minutes et sous débit d'air de 4 litres/min. Les normes européennes DIN EN 12607-1 + EN 14769 spécifient la méthode de vieillissement accéléré à long terme effectué dans une cuve de vieillissement sous pression (RTFOT + PAV de l'anglais « Presure aging vessel ») ; le vieillissement sous RTFOT a été réalisé dans les conditions données précédemment et celui sous PAV à une température de 100°C, pendant 20 heures et à une pression de 2,1 MPa.
- La résistance aux basses températures (Détermination du module de rigidité en flexion, Rhéomètre à flexion de barreau, dite BBR), représentatif de la résistance à la fissuration a également été évaluée selon la norme DIN EN 14771. T(S=300MPa) est la température pour laquelle la rigidité est de 300MPa et T(m=0,3), la température pour laquelle la pente est égale à 0,3.

### Exemples

### a) Préparation d'une composition hydrocarbonée IC

Les pastilles d'hydroxyde de sodium ont été broyées en une poudre fine, en utilisant un broyeur IKA^{®} A11 (IKA-Werke GmbH & Co) à 28 000 tr / min, pendant environ 30 secondes. Ainsi, des particules d'hydroxyde de sodium (NaOH) ont été obtenues. Leur taille maximale moyenne mesurée sur 20 particules au microscope était d'environ 50 µm. En même temps, 500 g du bitume fluxé ont été chauffés à 50 °C dans un réacteur de diamètre d = 16 cm et sous agitation à 600 tr/min avec un agitateur dissolvant à plaque (diamètre D de la partie mécanique active), avec D / d = 0,4. La température a été contrôlée à l'aide d'un thermostat. 95,24 g d'hydroxyde de sodium en poudre ont été mis en suspension dans le bitume fluxé sous agitation et l'agitation a été maintenue pendant 30 minutes. Dans la composition **IC** obtenue, le % massique de NaOH était de 16%, sur la base de la masse totale de la composition **IC** obtenue. La composition **IC** obtenue a été observée par microscopie sous lumière visible, ce qui a montré que la soude était bien sous la forme de particules dont plus de 80% avaient une taille maximale inférieure ou égale à 50 µm.

### b) Préparation de la composition bitumineuse modifiée

La composition **IC** préparée précédemment a été chauffée jusqu'à 50 °C maximum (la viscosité du bitume fluxé diminuant à des températures plus élevées, ce qui entraînerait une vitesse de décantation plus élevée du NaOH) sous agitation dans un réacteur avec un agitateur comme décrit dans la partie a) (D / d = 0,4) à 600 tr/min pour homogénéiser.

En parallèle, 2500 g de base bitume ont été chauffés à 180 °C dans un réacteur et agités à l'aide d'un agitateur tel que décrit dans la partie a) (D / d = 0,4) à plus de 400 tr/min pour homogénéiser la base bitume. La composition préparée **IC** a été directement ajoutée dans la base bitume (3,23 g de composition **IC** pour 100 g de base bitume = 3,13% en masse dans la composition bitumineuse finale). A la fin de l'addition de la composition **IC,** l'agitation a été maintenue pendant 30 minutes.

Le mélange a ensuite été maintenu pendant 3 heures dans des conditions d'agitation à 600 tr/min. La température du mélange a été contrôlée pour ne pas dépasser 170 °C. Des échantillons ont été régulièrement prélevés du réacteur pour mesurer leur TBA et leur Pene. Le mélange a été arrêté lorsque les deux ont été stabilisés. Ensuite, le mélange a été refroidi à 160 °C et 5,04 g du promoteur d'adhérence H1 ont été ajoutés. Le mélange a été maintenu pendant 20 minutes. Dans la composition bitumineuse finale, le % en masse de NaOH était de 0,500%, de promoteur d'adhésion H1 de 0,194 % en masse et de bitume fluxé de 2,623 % en masse, sur la base de la masse totale de la composition bitumineuse finale.

Le Tableau 1 ci-après présente la TBA et la Pene, avant et après RTFOT et RTFOT+PAV, pour la base bitume seule et pour la composition bitumineuse conforme à l'invention.

**Tableau 1**

| | | | **Composition bitumineuse** | **Composition bitumineuse** | **Composition bitumineuse** |
|---|---|---|---|---|---|
| | | | **Référence** | **Modifiée H1** | **Invention** |
| **Paramètre** | **Norme** | **Unité** | | | |
| **TBA** | DIN EN 1427 | °C | 66,2 | 66,0 | 69,2 |
| **Pene** | DIN EN 1426 | mm/10 | 9 | 10 | 12 |
| **Indice de pénétrabilité** | DIN EN 1427 Appendice B | - | -1,1 | | -0,2 |
| **Résistance au vieillissement RTFOT** | DIN EN 12607-1 | - | | | |
| **TBA** | DIN EN 1427 | °C | 75,8 | 75,6 | 75,6 |
| **Changement TBA** | DIN EN 1427 | °C | 9,6 | 9,6 | 6,4 |
| **Pene** | DIN EN 1426 | mm/10 | 5 | 6 | 8 |
| **Maintien Pene** | DIN EN 1426 | % | 56 | 60 | 67 |
| **Résistance au vieillissement RTFOT et PAV** | DIN EN 12607-1 + 14769 | - | | | |
| **TBA** | DIN EN 1427 | °C | 86,0 | 86 | 84,5 |
| **Changement TBA** | DIN EN 1427 | °C | 19,8 | 20 | 15,3 |
| **Pene** | DIN EN 1426 | mm/10 | 5 | 5 | 7 |
| **Maintien Pene** | DIN EN 1426 | % | 56 | 50 | 58 |

Ces résultats montrent que la composition bitumineuse selon l'invention répond aux spécifications de la norme routière EN 12591, à savoir :
- Après RTFOT, la variation de la TBA est de 6,4°C, et est donc inférieure à 8°C, comme imposé par la norme, contrairement à celle non modifiée par ajout de soude,
- Après RTFOT, la Pene est maintenue à 67%, ce qui est donc supérieur à 60%, comme imposé par la norme, contrairement à celle non modifiée par ajout de soude,
- Après RTFOT + PAV, la variation de la TBA est de 15,3°C, et est donc inférieure à 16°C, comme imposé par la norme, contrairement à celle non modifiée par ajout de soude,
- Après RTFOT+PAV, la Pene est maintenue à 58%, ce qui est donc supérieur à 50%, comme imposé par la norme.

Par ailleurs, à titre complémentaire, les mesures réalisées sur la base bitume modifiée uniquement par ajout de 0,194 % en masse de promoteur d'adhésion H1 (composition bitumineuse modifiée H1) montrent que les stabilités des TBA et Pene après RTFOT, et après RTFOT et PAV sont très proches de celles obtenues pour le base bitume de référence.

La résistance aux basses températures, représentative de la résistance à la fissuration a également été évaluée selon la norme DIN EN 14771. Les résultats sont présentés dans le Tableau 2.

**Tableau 2**

| **RSV VR** | **Composition bitumineuse Référence** | | **Composition bitumineuse Invention** | |
|---|---|---|---|---|
| | Initial | Après RTFOT | Initial | Après RTFOT |
| **T(S=300MPa)** | -5,6°C | -3,7°C (+1,9°C) | -6,3°C | -5,4°C (+0,9°C) |
| **Valeur de m à T(S=300MPa)** | 0,317 | 0,285 | 0,311 | 0,297 |
| **T(m=0,3)** | -6,9°C | -2,0°C (+4,9°C) | -7,2 °C | -5,1°C (+2,1°C) |
| **S à T(m=0,3)** | 359,67 MPa | 249,15 MPa | 334,66 MPa | 288,09 MPa |

Ces résultats montrent que la composition bitumineuse selon l'invention présente une température T(S=300 MPa) plus basse et une variation après RTFOT inférieure, par rapport à celle non modifiée par ajout de soude. De même, la composition bitumineuse selon l'invention présente une température T(m=0,3) plus basse et une variation après RTFOT inférieure, ainsi qu'une valeur de S à T(m=0,3) inférieure par rapport à celle non modifiée par ajout de soude. Tous ces résultats rendent compte d'une meilleure résistance à la fissuration obtenue grâce à l'incorporation de soude, dans les compositions bitumineuses selon l'invention.

## Revendications

1. Composition bitumineuse comprenant un mélange :
- d'une base bitume, qui représente au moins 50% en masse, et de préférence au moins 80% en masse, et préférentiellement au moins 90% en masse, de la masse totale de la composition, et
- d'un hydroxyde XOH avec X = Na ou K, qui représente de 0,001 à 1 % en masse, de la masse totale de la composition,
la dite base bitume ayant une stabilité intrinsèque S de 1 à 2,5 et/ou un taux de peptisation Sa de 0 à 0,6, lesdites valeurs S et Sa étant mesurées selon la norme ASTM D 7157-12.

2. Composition selon la revendication 1, **caractérisée en ce que** la base bitume est un mélange de produits issus de la viscoréduction de résidus de distillation sous pression réduite, lesdits résidus de distillation sous pression réduite provenant de la distillation sous pression réduite de résidus atmosphériques issus de la distillation directe sous pression atmosphérique du pétrole.

3. Composition selon la revendication 1 ou 2, **caractérisée en ce qu'**elle comprend de 0,002 à 0,5 % en masse, de préférence de 0,01 à 0,5 % en masse d'hydroxyde XOH avec X = Na ou K, les % étant des % massiques, par rapport à la masse totale de la composition.

4. Composition selon l'une des revendications 1 à 3,
**caractérisée en ce que** l'hydroxyde XOH, avec X = Na ou K, forme des particules qui ont une taille maximale moyenne dans la gamme de 10 à 100 µm, de préférence dans la gamme de 20 à 60 µm et/ou qui ont une taille maximale inférieure ou égale à 100 µm, de préférence inférieure ou égale à 60 µm.

5. Composition selon l'une des revendications 1 à 4,
**caractérisée en ce que** l'hydroxyde XOH est de la soude.

6. Composition selon l'une des revendications 1 à 5,
**caractérisée en ce qu'**après vieillissement RTFOT (à une température de 163°C, pendant 75 minutes et sous débit d'air de 4 litres/min), selon la norme EN 12607-1, la variation de la température de ramollissement bille anneau de ladite composition, déterminée selon la norme EN 1427, est inférieure à 8°C et/ou le maintien de la pénétrabilité à l'aiguille à 25°C de ladite composition, déterminée selon la norme EN 1426, est supérieur à 60%.

7. Composition selon l'une des revendications 1 à 6,
**caractérisée en ce qu'**après vieillissement RTFOT (à une température de 163°C, pendant 75 minutes et sous débit d'air de 4 litres/min) selon la norme EN 12607-1, la variation de la température de ramollissement bille anneau de la base bitume, déterminée selon la norme EN 1427, est supérieure à 8°C et/ou le maintien de la pénétrabilité à l'aiguille à 25°C de ladite base bitume, déterminée selon la norme EN 1426, est inférieur ou égal à 60%.

8. Composition selon l'une des revendications 1 à 7,
**caractérisée en ce qu'**après vieillissement RTFOT (à une température de 163°C, pendant 75 minutes et sous débit d'air de 4 litres/min) + PAV (à une température de 100°C, pendant 20 heures et à une pression de 2100 kPa), selon les normes EN 12607-1 et EN 14769, la variation de la température de ramollissement bille anneau de ladite composition, déterminée selon la norme EN 1427, est inférieure à 16°C et/ou le maintien de la pénétrabilité à l'aiguille à 25°C de ladite composition, déterminée selon la norme EN 1426, est supérieur à 50%.

9. Composition selon l'une des revendications 1 à 8,
**caractérisée en ce qu'**elle présente une pénétrabilité à l'aiguille à 25°C, déterminée selon la norme EN 1426, qui appartient à la gamme allant de 5 à 80 mm/10 et/ou une température de ramollissement bille anneau, déterminée selon la norme EN 1427, qui appartient à la gamme allant de 45 à 75°C.

10. Composition selon l'une des revendications 1 à 9,
**caractérisée en ce qu'**après vieillissement RTFOT (à une température de 163°C, pendant 75 minutes et sous débit d'air de 4 litres/min) + PAV (à une température de 100°C, pendant 20 heures et à une pression de 2100 kPa), selon les normes EN 12607-1 et EN 14769, la variation de la température de ramollissement bille anneau de la base bitume, déterminée selon la norme EN 1427, est supérieure à 16°C.

11. Composition selon l'une des revendications 1 à 10,
**caractérisée en ce qu'**elle comprend, en outre, un composant hydrocarboné **CH**, choisi parmi les huiles hydrocarbonées, les bitumes de grade mou, les bitumes fluxés, les bitumes fluidifiés et leurs mélanges, ledit composant hydrocarboné **CH** représentant de préférence au plus 10% en masse, préférentiellement 0,1 à 10% en masse, de manière plus préférée 0,5 à 8% en masse, et de manière encore plus préférée 1 à 5% en masse, de la masse totale de la composition.

12. Composition selon l'une des revendications 1 à 11,
**caractérisée en ce qu'**elle comprend, en outre, un promoteur d'adhésion choisi parmi les amines, diamines, polyamines, alkyl amido amines, amidopolyamines, imidazolines, et leurs mélanges, ledit promoteur d'adhésion représentant de préférence 0,01 à 2 % en masse, préférentiellement 0,05 à 1 % en mase, et de manière encore plus préférée 0,1 à 0,3 % en masse, de la masse totale de la composition.

13. Procédé de préparation d'une composition bitumineuse, comprenant les étapes suivantes :
a- disposer d'une composition bitumineuse initiale comprenant une base bitume ayant une stabilité intrinsèque S de 1 à 2,5 et/ou un taux de peptisation Sa de 0 à 0,6, lesdites valeurs S et Sa étant mesurées selon la norme ASTM D 7157-12, et
b- incorporer un hydroxyde XOH avec X = Na ou K, dans une quantité telle que la quantité d'hydroxyde XOH introduite représente de 0,001 à 1 % en masse, de la masse totale de la composition bitumineuse finale obtenue, la composition bitumineuse initiale comprenant ladite base bitume en quantité telle que ladite base bitume représente au moins 50% en masse, de préférence au moins 80% en masse, et préférentiellement au moins 90% en masse, de la masse totale de la composition bitumineuse obtenue.

14. Procédé de préparation selon la revendication 13
**caractérisé en ce qu'**à l'étape b, une composition hydrocarbonée **IC** comprenant de 15 à 50% en masse d'hydroxyde XOH avec X = Na ou K est incorporée à la composition bitumineuse initiale, ladite composition **IC**, comprenant un composant hydrocarboné **CH**, de préférence choisi parmi les huiles hydrocarbonées, les bitumes de grade mou, les bitumes fluxés, les bitumes fluidifiés et leurs mélanges.

15. Procédé de préparation selon la revendication 14
**caractérisé en ce que** l'hydroxyde XOH, avec X = Na ou K, est présent dans la composition **IC**, sous la forme de particules qui ont une taille maximale moyenne dans la gamme de 10 à 100 µm, de préférence dans la gamme de 20 à 60 µm et/ou qui ont une taille maximale inférieure ou égale à 100 µm, de préférence inférieure ou égale à 60 µm.

16. Procédé de préparation selon l'une des revendications 13 à 15 **caractérisé en ce que** l'incorporation de la composition hydrocarbonée **IC** dans la composition bitumineuse initiale, est effectuée, à une température appartenant à la gamme allant de 150 à 220 °C, de préférence à la gamme allant de 160 à 190 °C et/ou avec une agitation appartenant à la gamme allant de 100 à 500 tr/min, de préférence à la gamme allant de 200 à 400 tr/min et/ou pendant une durée de 10 à 180 minutes, de préférence de 10 à 20 minutes.

17. Utilisation d'un hydroxyde XOH avec X = Na ou K, dans une composition bitumineuse qui comprend une base bitume ayant une stabilité intrinsèque S de 1 à 2,5 et/ou un taux de peptisation Sa de 0 à 0,6, lesdites valeurs S et Sa étant mesurées selon la norme ASTM D 7157-12, ladite base bitume représentant au moins 50% en masse, de préférence au moins 80% en masse, et préférentiellement au moins 90% en masse, de la masse totale de la composition bitumineuse, dans laquelle l'hydroxyde XOH avec X = Na ou K est introduit dans la composition bitumineuse, dans une quantité représentant de 0,001 à 1 % en masse, de préférence, de 0,002 à 0,5 % en masse, et préférentiellement de 0,01 à 0,5 % en masse, de la masse totale de la composition bitumineuse, pour améliorer la résistance au vieillissement sous RTFOT (à une température de 163°C, pendant 75 minutes et sous débit d'air de 4 litres/min) réalisé selon la norme EN 1426 et/ou la résistance au vieillissement sous RTFOT (à une température de 163°C, pendant 75 minutes et sous débit d'air de 4 litres/min) + PAV (à une température de 100°C, pendant 20 heures et à une pression de 2100 kPa) réalisés selon les normes EN 12607-1 et EN 14769, les % en masse donnés pour la base bitume et l'hydroxyde étant calculés par rapport à la masse totale de la composition bitumineuse incluant l'hydroxyde.

18. Utilisation selon la revendication 17 **caractérisée en ce que** l'introduction de l'hydroxyde XOH avec X = Na ou K dans la composition bitumineuse conduit, après vieillissement RTFOT (à une température de 163°C, pendant 75 minutes et sous débit d'air de 4 litres/min), selon la norme EN 12607-1, à une variation de la température de ramollissement bille anneau, déterminée selon la norme EN 1427, inférieure à 8°C et/ou à un maintien de la pénétrabilité à l'aiguille à 25°C, déterminée selon la norme EN 1426, supérieur à 60%.

19. Utilisation selon la revendication 17 ou 18, **caractérisée en ce que** l'introduction de l'hydroxyde XOH avec X = Na ou K dans la composition bitumineuse conduit, après vieillissement RTFOT (à une température de 163°C, pendant 75 minutes et sous débit d'air de 4 litres/min) + PAV (à une température de 100°C, pendant 20 heures et à une pression de 2100 kPa), selon les normes EN 12607-1 et EN 14769, à une variation de la température de ramollissement bille anneau, déterminée selon la norme EN 1427, inférieure à 16°C et/ou à un maintien de la pénétrabilité à l'aiguille à 25°C, déterminée selon la norme EN 1426, supérieur à 50%.

20. Utilisation d'un hydroxyde XOH avec X = Na ou K, dans une composition bitumineuse qui comprend une base bitume ayant une stabilité intrinsèque S de 1 à 2,5 et/ou un taux de peptisation Sa de 0 à 0,6, lesdites valeurs S et Sa étant mesurées selon la norme ASTM D 7157-12, ladite base bitume représentant au moins 50% en masse, de préférence au moins 80% en masse, et préférentiellement au moins 90% en masse, de la masse totale de la composition bitumineuse, dans laquelle l'hydroxyde XOH avec X = Na ou K est introduit dans la composition bitumineuse, dans une quantité représentant de 0,001 à 1 % en masse, de préférence, de 0,002 à 0,5 % en masse, et préférentiellement de 0,01 à 0,5 % en masse, de la masse totale de la composition bitumineuse, pour améliorer la résistance aux basses températures évaluée selon la norme DIN EN 14771, les % en masse donnés pour la base bitume et l'hydroxyde étant calculés par rapport à la masse totale de la composition bitumineuse incluant l'hydroxyde.

21. Utilisation d'une composition selon l'une quelconque des revendications 1 à 12, pour préparer un revêtement d'étanchéité, une membrane ou une couche d'imprégnation.

22. Procédé de préparation d'un enrobé **caractérisé en ce qu'**il comprend le mélange à chaud d'une composition selon l'une quelconque des revendications 1 à 12, avec des granulats, et éventuellement des charges minérales et/ou synthétiques.

23. Enrobé comprenant une composition selon l'une quelconque des revendications 1 à 12, en mélange avec des granulats, et éventuellement des charges minérales et/ou synthétiques.

24. Procédé de préparation d'un asphalte **caractérisé en ce qu'**il comprend le mélange à chaud d'une composition selon l'une quelconque des revendications 1 à 12, avec des charges minérales et/ou synthétiques.

25. Asphalte comprenant une composition selon l'une quelconque des revendications 1 à 12, en mélange avec des charges minérales et/ou synthétiques.

26. Utilisation d'une composition selon l'une quelconque des revendications 1 à 12, pour préparer un enduit superficiel, un enrobé à chaud, un enrobé à froid, un enrobé coulé à froid, une grave émulsion ou une couche de roulement, ladite composition étant associée à des granulats et/ou des fraisats de recyclage.

## Patentansprüche

1. Bituminöse Zusammensetzung, umfassend ein Gemisch:
- aus einer Bitumenbasis, die mindestens 50% massenbezogen, und vorzugsweise mindestens 80% massenbezogen, und bevorzugt mindestens 90% massenbezogen, bezogen auf die Gesamtmasse der Zusammensetzung, ausmacht, und
- aus einem Hydroxid XOH, wobei X = Na oder K ist, das 0,001 bis 1 Massen-% bezogen auf die Gesamtmasse der Zusammensetzung ausmacht, wobei die besagte Bitumenbasis eine intrinsische Stabilität S von 1 bis 2,5 und/oder einen Peptisationsgrad Sa von 0 bis 0,6 aufweist, wobei die besagten Werte S und Sa gemäß der Norm ASTM D 7157-12 gemessen werden.

2. Zusammensetzung nach Anspruch 1, **dadurch gekennzeichnet, dass** die Bitumenbasis ein Gemisch aus Produkten ist, die aus der Visbreaking-Behandlung von Rückständen der Destillation unter vermindertem Druck stammen, wobei die besagten Rückstände der Destillation unter vermindertem Druck aus der Destillation unter vermindertem Druck von atmosphärischen Rückständen stammen, die aus der direkten Destillation von Erdöl unter atmosphärischem Druck stammen.

3. Zusammensetzung nach Anspruch 1 oder 2, **dadurch gekennzeichnet, dass** sie 0,002 bis 0,5 Massen-%, vorzugsweise 0,01 bis 0,5 Massen-% Hydroxid XOH, wobei X = Na oder K ist, umfasst, wobei die % Massen-% bezogen auf die Gesamtmasse der Zusammensetzung sind.

4. Zusammensetzung nach einem der Ansprüche 1 bis 3, **dadurch gekennzeichnet, dass** das Hydroxid XOH, wobei X = Na oder K ist, Partikel bildet, die eine durchschnittliche maximale Größe im Bereich von 10 bis 100 µm, vorzugsweise im Bereich von 20 bis 60 µm aufweisen und/oder die eine maximale Größe von höchstens 100 µm, vorzugsweise von höchstens
60 µm aufweisen.

5. Zusammensetzung nach einem der Ansprüche 1 bis 4, **dadurch gekennzeichnet, dass** das Hydroxid XOH Natronlauge ist.

6. Zusammensetzung nach einem der Ansprüche 1 bis 5, **dadurch gekennzeichnet, dass** nach RTFOT-Alterung (bei einer Temperatur von 163°C, während 75 Minuten und bei einem Luftdurchsatz von 4 Litern/min) gemäß der Norm EN 12607-1 die Änderung der Ring-und-Kugel-Erweichungstemperatur der besagten Zusammensetzung, gemäß der Norm EN 1427 bestimmt, weniger als 8°C beträgt und/oder die Erhaltung der Nadelpenetration bei 25°C der besagten Zusammensetzung, gemäß der Norm EN 1426 bestimmt, mehr als 60% beträgt.

7. Zusammensetzung nach einem der Ansprüche 1 bis 6, **dadurch gekennzeichnet, dass** nach RTFOT-Alterung (bei einer Temperatur von 163°C, während 75 Minuten und bei einem Luftdurchsatz von 4 Litern/min) gemäß der Norm EN 12607-1 die Änderung der Ring-und-Kugel-Erweichungstemperatur der Bitumenbasis, gemäß der Norm EN 1427 bestimmt, mehr als 8°C beträgt und/oder die Erhaltung der Nadelpenetration bei 25°C der besagten Bitumenbasis, gemäß der Norm EN 1426 bestimmt, höchstens 60% beträgt.

8. Zusammensetzung nach einem der Ansprüche 1 bis 7, **dadurch gekennzeichnet, dass** nach RTFOT-Alterung (bei einer Temperatur von 163°C, während 75 Minuten und bei einem Luftdurchsatz von 4 Litern/min) + PAV (bei einer Temperatur von 100°C, während 20 Stunden und bei einem Druck von 2100 kPa) gemäß den Normen EN 12607-1 und EN 14769 die Änderung der Ring-und-Kugel-Erweichungstemperatur der besagten Zusammensetzung, gemäß der Norm EN 1427 bestimmt, weniger als 16°C beträgt und/oder die Erhaltung der Nadelpenetration bei 25°C der besagten Zusammensetzung, gemäß der Norm EN 1426 bestimmt, mehr als 50% beträgt.

9. Zusammensetzung nach einem der Ansprüche 1 bis 8, **dadurch gekennzeichnet, dass** sie eine Nadelpenetration bei 25 °C, gemäß der Norm EN 1426 bestimmt, die im Bereich von 5 bis 80 mm/10 liegt, und/oder eine Ring-und-Kugel-Erweichungstemperatur, gemäß der Norm EN 1427 bestimmt, die im Bereich von 45 bis 75°C liegt, aufweist.

10. Zusammensetzung nach einem der Ansprüche 1 bis 9, **dadurch gekennzeichnet, dass** nach RTFOT-Alterung (bei einer Temperatur von 163°C°C, während 75 Minuten und bei einem Luftdurchsatz von 4 Litern/min) + PAV (bei einer Temperatur von 100°C, während 20 Stunden und bei einem Druck von 2100 kPa) gemäß den Normen EN 12607-1 und EN 14769 die Änderung der Ring-und-Kugel-Erweichungstemperatur der Bitumenbasis, gemäß der Norm EN1427 bestimmt, mehr als 16°C beträgt.

11. Zusammensetzung nach einem der Ansprüche 1 bis 10, **dadurch gekennzeichnet, dass** sie ferner eine Kohlenwasserstoffkomponente **CH** umfasst, ausgewählt aus Kohlenwasserstoffölen, Bitumen weicher Sorte, gefluxten Bitumen, verflüssigten Bitumen und deren Gemischen, wobei die besagte Kohlenwasserstoffkomponente **CH** vorzugsweise höchstens 10 Massen-%, bevorzugt 0,1 bis 10 Massen-%, stärker bevorzugt 0,5 bis 8 Massen-% und noch stärker bevorzugt 1 bis 5 Massen-% bezogen auf die Gesamtmasse der Zusammensetzung ausmacht.

12. Zusammensetzung nach einem der Ansprüche 1 bis 11, **dadurch gekennzeichnet, dass** sie ferner einen Haftvermittler umfasst, ausgewählt aus Aminen, Diaminen, Polyaminen, Alkylamidoaminen, Amidopolyaminen, Imidazolinen und deren Gemischen, wobei der besagte Haftvermittler vorzugsweise 0,01 bis 2 Massen-%, bevorzugt 0,05 bis 1 Massen-% und noch stärker bevorzugt 0,1 bis 0,3 Massen-% bezogen auf die Gesamtmasse der Zusammensetzung ausmacht.

13. Verfahren zur Herstellung einer bituminösen Zusammensetzung, umfassend die folgenden Schritte:
a- Bereitstellen einer anfänglichen bituminösen Zusammensetzung, umfassend eine Bitumenbasis mit einer intrinsischen Stabilität S von 1 bis 2,5 und/oder einem Peptisationsgrad Sa von 0 bis 0,6, wobei die besagten Werte S und Sa gemäß der Norm ASTM D 7157-12 gemessen werden, und
b- Einarbeiten eines Hydroxids XOH, wobei X = Na oder K ist, in einer solchen Menge, dass die Menge des eingebrachten Hydroxids XOH 0,001 bis 1 Massen-% bezogen auf die Gesamtmasse der erhaltenen endgültigen bituminösen Zusammensetzung ausmacht, wobei die anfängliche bituminöse Zusammensetzung die besagte Bitumenbasis in einer solchen Menge umfasst, dass die besagte Bitumenbasis mindestens 50 Massen-%, vorzugsweise mindestens 80 Massen-% und bevorzugt mindestens 90 Massen-% bezogen auf die Gesamtmasse der erhaltenen bituminösen Zusammensetzung ausmacht.

14. Herstellungsverfahren nach Anspruch 13, **dadurch gekennzeichnet, dass** in Schritt b eine Kohlenwasserstoffzusammensetzung **IC**, die 15 bis 50 Massen-% Hydroxid XOH, wobei X = Na oder K ist, umfasst, in die anfängliche bituminöse Zusammensetzung eingearbeitet wird, wobei die besagte Zusammensetzung **IC** eine Kohlenwasserstoffkomponente **CH** umfasst, die vorzugsweise aus Kohlenwasserstoffölen, Bitumen weicher Sorte, gefluxten Bitumen, verflüssigten Bitumen und deren Gemischen ausgewählt ist.

15. Herstellungsverfahren nach Anspruch 14, **dadurch gekennzeichnet, dass** das Hydroxid XOH, wobei X = Na oder K ist, in der Zusammensetzung **IC** in Form von Partikeln vorliegt, die eine durchschnittliche maximale Größe im Bereich von 10 bis 100 µm, vorzugsweise im Bereich von 20 bis 60 µm aufweisen und/oder die eine maximale Größe von höchstens 100 µm, vorzugsweise von höchstens 60 µm aufweisen.

16. Herstellungsverfahren nach einem der Ansprüche 13 bis 15, **dadurch gekennzeichnet, dass** die Einarbeitung der Kohlenwasserstoffzusammensetzung **IC** in die anfängliche bituminöse Zusammensetzung bei einer Temperatur erfolgt, die im Bereich von 150 bis 220°C, vorzugsweise im Bereich von 160 bis 190°C liegt und/oder unter Rühren mit einer Drehzahl, die im Bereich von 100 bis 500 U/min, vorzugsweise im Bereich von 200 bis 400 U/min liegt, und/oder während einer Dauer von 10 bis 180 Minuten, vorzugsweise von 10 bis 20 Minuten.

17. Verwendung eines Hydroxids XOH, wobei X = Na oder K ist, in einer bituminösen Zusammensetzung, die eine Bitumenbasis umfasst, die eine intrinsische Stabilität S von 1 bis 2,5 und/oder einen Peptisationsgrad Sa von 0 bis 0,6 aufweist, wobei die besagten Werte S und Sa gemäß der Norm ASTM D 7157-12 gemessen werden, wobei die besagte Bitumenbasis mindestens 50 Massen-%, vorzugsweise mindestens 80 Massen-% und bevorzugt mindestens 90 Massen-% bezogen auf die Gesamtmasse der bituminösen Zusammensetzung ausmacht, in die das Hydroxid XOH, wobei X = Na oder K ist, in einer Menge in die bituminöse Zusammensetzung eingebracht wird, die 0,001 bis 1 Massen-%, vorzugsweise 0,002 bis 0,5 Massen-% und bevorzugt 0,01 bis 0,5 Massen-% bezogen auf die Gesamtmasse der bituminösen Zusammensetzung ausmacht, um die Beständigkeit gegen Alterung unter RTFOT (bei einer Temperatur von 163°C, während 75 Minuten und bei einem Luftdurchsatz von 4 Litern/min), durchgeführt gemäß der Norm EN 1426, und/oder die Beständigkeit gegen Alterung unter RTFOT (bei einer Temperatur von 163°C, während 75 Minuten und bei einem Luftdurchsatz von 4 Litern/min) + PAV (bei einer Temperatur von 100°C, während 20 Stunden und bei einem Druck von 2100 kPa), durchgeführt gemäß den Normen EN 12607-1 und EN 14769, zu verbessern, wobei die für die Bitumenbasis und das Hydroxid angegebenen Massen-% bezogen auf die Gesamtmasse der bituminösen Zusammensetzung einschließlich des Hydroxids berechnet werden.

18. Verwendung nach Anspruch 17, **dadurch gekennzeichnet, dass** das Einbringen des Hydroxids XOH, wobei X = Na oder K ist, in die bituminöse Zusammensetzung nach RTFOT-Alterung (bei einer Temperatur von 163°C, während 75 Minuten und bei einem Luftdurchsatz von 4 Litern/min) gemäß der Norm EN 12607-1 zu einer Änderung der Ring-und-Kugel-Erweichungstemperatur, gemäß der Norm EN 1427 bestimmt, von weniger als 8°C und/oder zu einer Erhaltung der Nadelpenetration bei 25°C, gemäß der Norm EN 1426 bestimmt, von mehr als 60% führt.

19. Verwendung nach Anspruch 17 oder 18, **dadurch gekennzeichnet, dass** das Einbringen des Hydroxids XOH, wobei X = Na oder K ist, in die bituminöse Zusammensetzung nach RTFOT-Alterung (bei einer Temperatur von 163°C, während 75 Minuten und bei einem Luftdurchsatz von 4 Litern/min) + PAV (bei einer Temperatur von 100°C, während 20 Stunden und bei einem Druck von 2100 kPa) gemäß den Normen EN 12607-1 und EN 14769 zu einer Änderung der Ring-und-Kugel-Erweichungstemperatur, gemäß der Norm EN 1427 bestimmt, von weniger als 16°C und/oder zu einer Erhaltung der Nadelpenetration bei 25°C, gemäß der Norm EN 1426 bestimmt, von mehr als 50% führt.

20. Verwendung eines Hydroxids XOH, wobei X = Na oder K ist, in einer bituminösen Zusammensetzung, die eine Bitumenbasis umfasst, die eine intrinsische Stabilität S von 1 bis 2,5 und/oder einen Peptisationsgrad Sa von 0 bis 0,6 aufweist, wobei die besagten Werte S und Sa gemäß der Norm ASTM D 7157-12 gemessen werden, wobei die besagte Bitumenbasis mindestens 50 Massen-%, vorzugsweise mindestens 80 Massen-% und bevorzugt mindestens 90 Massen-% bezogen auf die Gesamtmasse der bituminösen Zusammensetzung ausmacht, in die das Hydroxid XOH, wobei X = Na oder K ist, in einer Menge in die bituminöse Zusammensetzung eingebracht wird, die 0,001 bis 1 Massen-%, vorzugsweise 0,002 bis 0,5 Massen-% und bevorzugt 0,01 bis 0,5 Massen-% bezogen auf die Gesamtmasse der bituminösen Zusammensetzung ausmacht, um die gemäß der Norm DIN EN 14771 bewertete Beständigkeit gegen niedrige Temperaturen zu verbessern, wobei die für die Bitumenbasis und das Hydroxid angegebenen Massen-% bezogen auf die Gesamtmasse der bituminösen Zusammensetzung einschließlich des Hydroxids berechnet werden.

21. Verwendung einer Zusammensetzung nach einem beliebigen der Ansprüche 1 bis 12 zur Herstellung einer Abdichtungsbeschichtung, einer Membran oder einer Imprägnierungsschicht.

22. Verfahren zur Herstellung eines Asphaltmischguts, **dadurch gekennzeichnet, dass** es das Heißmischen einer Zusammensetzung nach einem beliebigen der Ansprüche 1 bis 12 mit Gesteinskörnungen und gegebenenfalls mineralischen und/oder synthetischen Füllstoffen umfasst.

23. Asphaltmischgut, umfassend eine Zusammensetzung nach einem beliebigen der Ansprüche 1 bis 12 im Gemisch mit Gesteinskörnungen und gegebenenfalls mineralischen und/oder synthetischen Füllstoffen.

24. Verfahren zur Herstellung eines Asphalts, **dadurch gekennzeichnet, dass** es das Heißmischen einer Zusammensetzung nach einem beliebigen der Ansprüche 1 bis 12 mit mineralischen und/oder synthetischen Füllstoffen umfasst.

25. Asphalt, umfassend eine Zusammensetzung nach einem beliebigen der Ansprüche 1 bis 12 im Gemisch mit mineralischen und/oder synthetischen Füllstoffen.

26. Verwendung einer Zusammensetzung nach einem beliebigen der Ansprüche 1 bis 12 zur Herstellung eines Oberflächenputzes, eines Heißasphaltmischguts, eines Kaltasphaltmischguts, eines kalt gegossenen Asphaltmischguts, eines Emulsionsschotters oder einer Deckschicht, wobei die Zusammensetzung mit Gesteinskörnungen und/oder Recyclingfräsgut kombiniert ist.

## Claims

1. Bituminous composition comprising a mixture:
- of a bitumen base, which represents at least 50% by weight, and preferably at least 80% by weight, and preferentially at least 90% by weight, of the total weight of the composition, and
- of a hydroxide XOH with X = Na or K, which represents from 0.001 to 1% by weight, of the total weight of the composition, the said bitumen base having an intrinsic stability S of 1 to 2.5 and/or a peptization rate Sa of 0 to 0.6, said values S and Sa being measured according to the ASTM D 7157-12 standard.

2. Composition according to claim 1, **characterized in that** the bitumen base is a mixture of products resulting from the visbreaking of reduced-pressure distillation residues, said reduced-pressure distillation residues originating from the reduced-pressure distillation of atmospheric residues resulting from the direct distillation of petroleum under atmospheric pressure.

3. Composition according to claim 1 or 2, **characterized in that** it comprises from 0.002 to 0.5% by weight, preferably from 0.01 to 0.5% by weight of hydroxide XOH with X = Na or K, the % being percentages by weight, relative to the total weight of the composition.

4. Composition according to any one of claims 1 to 3, **characterized in that** the hydroxide XOH, with X = Na or K, forms particles which have an average maximum size in the range from 10 to 100 µm, preferably in the range from 20 to 60 µm and/or which have a maximum size less than or equal to 100 µm, preferably less than or equal to
60 µm.

5. Composition according to any one of claims 1 to 4, **characterized in that** the hydroxide XOH is caustic soda.

6. Composition according to any one of claims 1 to 5, **characterized in that** after RTFOT (Rolling Thin Film Oven Test) aging (at a temperature of 163°C, for 75 minutes and under an air flow rate of 4 liters/min), according to the EN 12607-1 standard, the variation in the ring-and-ball softening temperature of said composition, determined according to the EN 1427 standard, is less than 8°C and/or the retention of needle penetration at 25°C of said composition, determined according to the EN 1426 standard, is greater than 60%.

7. Composition according to any one of claims 1 to 6, **characterized in that** after RTFOT (Rolling Thin Film Oven Test) aging (at a temperature of 163°C, for 75 minutes and under an air flow rate of 4 liters/min) according to the EN 12607-1 standard, the variation in the ring-and-ball softening temperature of the bitumen base, determined according to the EN 1427 standard, is greater than 8°C and/or the retention of needle penetration at 25°C of said bitumen base, determined according to the EN 1426 standard, is less than or equal to 60%.

8. Composition according to any one of claims 1 to 7, **characterized in that** after RTFOT (Rolling Thin Film Oven Test) aging (at a temperature of 163°C, for 75 minutes and under an air flow rate of 4 liters/min) + PAV (Pressure Aging Vessel) (at a temperature of 100°C, for 20 hours and at a pressure of 2100 kPa), according to the EN 12607-1 and EN 14769 standards, the variation in the ring-and-ball softening temperature of said composition, determined according to the EN 1427 standard, is less than 16°C and/or the retention of needle penetration at 25°C of said composition, determined according to the EN 1426 standard, is greater than 50%.

9. Composition according to any one of claims 1 to 8, **characterized in that** it has a needle penetration at 25°C, determined according to the EN 1426 standard, which falls within the range from 5 to 80 mm/10 and/or a ring-and-ball softening temperature, determined according to the EN 1427 standard, which falls within the range from 45 to 75°C.

10. Composition according to any one of claims 1 to 9, **characterized in that** after RTFOT (Rolling Thin Film Oven Test) aging (at a temperature of 163°C°C, for 75 minutes and under an air flow rate of 4 liters/min) + PAV (Pressure Aging Vessel) (at a temperature of 100°C, for 20 hours and at a pressure of 2100 kPa), according to the EN 12607-1 and EN 14769 standards, the variation in the ring-and-ball softening temperature of the bitumen base, determined according to the EN1427 standard, is greater than 16°C.

11. Composition according to any one of claims 1 to 10, **characterized in that** it further comprises a hydrocarbon component **CH,** chosen from hydrocarbon oils, soft-grade bitumens, fluxed bitumens, cutback bitumens and mixtures thereof, said hydrocarbon component **CH** preferably representing at most 10% by weight, preferentially 0.1 to 10% by weight, more preferably 0.5 to 8% by weight, and even more preferably 1 to 5% by weight, of the total weight of the composition.

12. Composition according to any one of claims 1 to 11, **characterized in that** it further comprises an adhesion promoter chosen from amines, diamines, polyamines, alkyl amido amines, amidopolyamines, imidazolines, and mixtures thereof, said adhesion promoter preferably representing 0.01 to 2% by weight, preferentially 0.05 to 1% by weight, and even more preferably 0.1 to 0.3% by weight, of the total weight of the composition.

13. Process for preparing a bituminous composition, comprising the following steps:
a- providing an initial bituminous composition comprising a bitumen base having an intrinsic stability S of 1 to 2.5 and/or a peptization rate Sa of 0 to 0.6, said values S and Sa being measured according to the ASTM D 7157-12 standard, and
b- incorporating a hydroxide XOH with X = Na or K, in an amount such that the amount of hydroxide XOH introduced represents from 0.001 to 1% by weight, of the total weight of the final bituminous composition obtained, the initial bituminous composition comprising said bitumen base in an amount such that said bitumen base represents at least 50% by weight, preferably at least 80% by weight, and preferentially at least 90% by weight, of the total weight of the bituminous composition obtained.

14. Preparation process according to claim 13 **characterized in that** in step b, a hydrocarbon composition **IC** comprising from 15 to 50% by weight of hydroxide XOH with X = Na or K is incorporated into the initial bituminous composition, said composition **IC,** comprising a hydrocarbon component **CH,** preferably chosen from hydrocarbon oils, soft-grade bitumens, fluxed bitumens, cutback bitumens and mixtures thereof.

15. Preparation process according to claim 14 **characterized in that** the hydroxide XOH, with X = Na or K, is present in the composition **IC,** in the form of particles which have an average maximum size in the range from 10 to 100 µm, preferably in the range from 20 to 60 µm and/or which have a maximum size less than or equal to 100 µm, preferably less than or equal to 60 µm.

16. Preparation process according to any one of claims 13 to 15 **characterized in that** the incorporation of the hydrocarbon composition **IC** into the initial bituminous composition, is carried out, at a temperature falling within the range from 150 to 220°C, preferably the range from 160 to 190°C and/or with stirring falling within the range from 100 to 500 rpm, preferably the range from 200 to 400 rpm and/or for a period of 10 to 180 minutes, preferably 10 to 20 minutes.

17. Use of a hydroxide XOH with X = Na or K, in a bituminous composition which comprises a bitumen base having an intrinsic stability S of 1 to 2.5 and/or a peptization rate Sa of 0 to 0.6, said values S and Sa being measured according to the ASTM D 7157-12 standard, said bitumen base representing at least 50% by weight, preferably at least 80% by weight, and preferentially at least 90% by weight, of the total weight of the bituminous composition, in which the hydroxide XOH with X = Na or K is introduced into the bituminous composition, in an amount representing from 0.001 to 1% by weight, preferably, from 0.002 to 0.5% by weight, and preferentially from 0.01 to 0.5% by weight, of the total weight of the bituminous composition, to improve resistance to RTFOT (Rolling Thin Film Oven Test) aging (at a temperature of 163°C, for 75 minutes and under an air flow rate of 4 liters/min) carried out according to the EN 1426 standard and/or resistance to RTFOT (Rolling Thin Film Oven Test) aging (at a temperature of 163°C, for 75 minutes and under an airflow rate of 4 liters/min) + PAV (Pressure Aging Vessel) (at a temperature of 100°C, for 20 hours and at a pressure of 2100 kPa) carried out according to the EN 12607-1 and EN 14769 standards, the percentages by weight given for the bitumen base and the hydroxide being calculated relative to the total weight of the bituminous composition including the hydroxide.

18. Use according to claim 17 **characterized in that** the introduction of the hydroxide XOH with X = Na or K into the bituminous composition leads, after RTFOT (Rolling Thin Film Oven Test) aging (at a temperature of 163°C, for 75 minutes and under an air flow rate of 4 liters/min), according to the EN 12607-1 standard, to a variation in the ring-and-ball softening temperature, determined according to the EN 1427 standard, of less than 8°C and/or to a retention of needle penetration at 25°C, determined according to the EN 1426 standard, of greater than 60%.

19. Use according to claim 17 or 18, **characterized in that** the introduction of the hydroxide XOH with X = Na or K into the bituminous composition leads, after RTFOT (Rolling Thin Film Oven Test) aging (at a temperature of 163°C, for 75 minutes and under an air flow rate of 4 liters/min) + PAV (Pressure Aging Vessel) (at a temperature of 100°C, for 20 hours and at a pressure of 2100 kPa), according to the EN 12607-1 and EN 14769 standards, to a variation in the ring-and-ball softening temperature, determined according to the EN 1427 standard, of less than 16°C and/or to a retention of needle penetration at 25°C, determined according to the EN 1426 standard, of greater than 50%.

20. Use of a hydroxide XOH with X = Na or K, in a bituminous composition which comprises a bitumen base having an intrinsic stability S of 1 to 2.5 and/or a peptization rate Sa of 0 to 0.6, said values S and Sa being measured according to the ASTM D 7157-12 standard, said bitumen base representing at least 50% by weight, preferably at least 80% by weight, and preferentially at least 90% by weight, of the total weight of the bituminous composition, in which the hydroxide XOH with X = Na or K is introduced into the bituminous composition, in an amount representing from 0.001 to 1% by weight, preferably, from 0.002 to 0.5% by weight, and preferentially from 0.01 to 0.5% by weight, of the total weight of the bituminous composition, to improve resistance to low temperatures evaluated according to the DIN EN 14771 standard, the percentages by weight given for the bitumen base and the hydroxide being calculated relative to the total weight of the bituminous composition including the hydroxide.

21. Use of a composition according to any one of claims 1 to 12, to prepare a waterproofing coating, a membrane or an impregnation layer.

22. Method for preparing a bituminous mix **characterized in that** it comprises hot mixing a composition according to any one of claims 1 to 12 with aggregates, and optionally mineral and/or synthetic fillers.

23. Bituminous mix comprising a composition according to any one of claims 1 to 12, in admixture with aggregates, and optionally mineral and/or synthetic fillers.

24. Method for preparing an asphalt **characterized in that** it comprises hot mixing a composition according to any one of claims 1 to 12 with mineral and/or synthetic fillers.

25. Asphalt comprising a composition according to any one of claims 1 to 12, in admixture with mineral and/or synthetic fillers.

26. Use of a composition according to any one of claims 1 to 12, to prepare a surface coating, a hot bituminous mix, a cold bituminous mix, a cold-cast bituminous mix, an emulsion-treated aggregate or a wearing course, said composition being combined with aggregates and/or recycled millings.
